# EUROPEAN PATENT APPLICATION

(11) **EP 4 329 389 A1**
(43) Date of publication of application: **28.02.2024**
(21) Application number: 22858739.0
(22) Date of filing: 17.08.2022
(51) Int. Cl.: H04W 56/00, H04W 84/06

(54) **SYNCHRONIZATION METHOD AND DEVICE IN NON-TERRESTRIAL NETWORK**

(30) Priority: 20.08.2021 KR 20210110381
(71) Applicant: Samsung Electronics Co., Ltd., Suwon-si, Gyeonggi-do 16677 (KR)
(72) Inventor: KIM, Sunhyun, Suwon-si, Gyeonggi-do 16677 (KR); JUNG, Byounghoon, Suwon-si, Gyeonggi-do 16677 (KR); JUNG, Jungsoo, Suwon-si, Gyeonggi-do 16677 (KR)
(74) Representative: HGF
(86) International application number: PCT/KR2022/012264
(87) International publication number: WO 2023/022502

(57) **Abstract**

The present disclosure relates to a 6G communication system for accomplishing ultra-low latency and a data transmission rate higher than that of 4G and 5G communication systems. According to various embodiments of the present disclosure, even if a satellite forming a specific cell is changed in a non-terrestrial network (NTN), the terminal may change a satellite connection without initiating a procedure for synchronization with the changed satellite connection by performing uplink synchronization and downlink synchronization with the changed satellite on the basis of information for uplink synchronization and information for downlink synchronization that have been obtained in advance. Accordingly, even if a satellite in communication is changed, a user's terminal can experience high communication quality without interruption, and there is no need to perform the synchronization procedure which is performed when the existing satellite is changed, such that the number of communication signals among the terminal, the satellite, a core network, and a server (e.g. an NTN management server), etc., can be reduced, thereby reducing management complexity in the server and reducing power consumption of the terminal.

## Description

### [Technical Field]

The disclosure relates to a method for a terminal to change a satellite connection in a non-terrestrial network (NTN). More specifically, the disclosure relates to a method for a terminal to change a satellite connection by performing uplink synchronization and downlink synchronization with a changed satellite in case where the satellite forming a satellite cell in the NTN is changed.

### [Background Art]

Considering the development of mobile communication from generation to generation, the technologies have been developed mainly for services targeting humans, such as voice calls, multimedia services, and data services. As 5th-generation (5G) communication systems are commercially available, connected devices are expected to explosively increase and to be connected to a communication network. Examples of things connected to a network may include vehicles, robots, drones, home appliances, displays, smart sensors installed in various infrastructures, construction machinery, factory equipment, and the like. Mobile devices are expected to evolve in various form-factors, such as augmented reality glasses, virtual reality headsets, and hologram devices. In order to provide various services by connecting hundreds of billions of devices and things in the 6th-generation (6G) era, there have been ongoing efforts to develop improved 6G communication systems. For these reasons, 6G communication systems are referred to as Beyond-5G systems.

6G communication systems, which are expected to be commercialized around 2030, will have a peak data rate of tera (i.e., 1,000 giga) bps and a radio latency of 100 µsec. In other words, the transmission rate of the 6G communication system is 50 times faster than that of the 5G communication system, and the radio latency is reduced to one tenth.

In order to accomplish such a high data rate and an ultra-low latency, it has been considered to implement 6G communication systems in a terahertz band (e.g., 95 GHz to 3 THz bands). It is expected that, due to severer path loss and atmospheric absorption in the terahertz bands than those in mmWave bands introduced in 5G, technologies capable of securing the signal transmission distance, that is, coverage, will become more crucial. It is necessary to develop, as major technologies for securing the coverage, multiantenna transmission technologies, such as radio frequency (RF) elements, antennas, novel waveforms having a better coverage than orthogonal frequency division multiplexing (OFDM), beamforming and massive multiple-input and multiple-output (MIMO), full dimensional MIMO (FD-MIMO), array antennas, and large-scale antennas. In addition, there has been ongoing discussion on new technologies for improving the coverage of terahertz-band signals, such as metamaterial-based lenses and antennas, high-dimensional spatial multiplexing technology using orbital angular momentum (OAM), and reconfigurable intelligent surface (RIS).

Moreover, in order to improve the spectral efficiency and the system network, the following technologies have been developed for 6G communication systems: a full-duplex technology for enabling an uplink and a downlink to simultaneously use the same frequency resource at the same time; a network technology for utilizing satellites, high-altitude platform stations (HAPS), and the like in an integrated manner; network architecture innovation technology for enabling optimization and automation of network operation and supports mobile base stations; dynamic spectrum sharing technology through collision avoidance based on prediction of spectrum usages; artificial intelligence (AI)-based communication technology that uses AI from the stage of designing and internalizes end-to-end AI supporting function to thereby optimize the system; and a next-generation distributed computing technology for realizing services that exceed the limitation of the UE computation capability by ultra-high performance communication and computing resource (mobile edge computing (MEC), clouds, and the like). Further, continuous attempts have been made to reinforce connectivity between devices, further optimizing the network, prompting implementation of network entities in software, and increase the openness of wireless communication by the design of a new protocol to be used in 6G communication systems, implementation of a hardware-based security environment, development of a mechanism for safely using data, and development of technology for maintaining privacy.

It is expected that such research and development efforts for 6G communication systems would implement the next hyper-connected experience via hyper-connectivity of 6G communication systems which encompass human-thing connections as well as thing-to-thing connections. Particularly, it is expected that services such as truly immersive extended reality (XR), high-fidelity mobile hologram, and digital replica could be provided through 6G communication systems. In addition, services such as remote surgery through security and reliability enhancement, industrial automation, and emergency response will be provided through the 6G communication system such that the technologies could be applied in various fields such as industry, medical care, automobiles, and home appliances.

In the next-generation mobile communication system, referred to as 5G, Beyond 5G, or 6G, as described above, methods are being considered to utilize satellite networks to overcome the physical limitations of existing mobile communications and to expand the range of connectivity provided on the ground to a global level, and various communication techniques using satellite networks are being designed.

### [Disclosure of Invention]

### [Technical Problem]

Unlike existing terrestrial networks, satellite networks corresponding to an NTN may have relatively large delays (e.g., propagation delay) due to signal propagation characteristics and long distances when transmitting and receiving signals. Due to this delay, a problem may occur where the communication quality of the user terminal served by the satellite network deteriorates. Therefore, in constructing a communication system utilizing a non-terrestrial network, it is necessary to device a method to solve the above-mentioned problems.

### [Solution to Problem]

In order to solve the above problems, an embodiment of the disclosure provides a method of a terminal in a non-terrestrial network (NTN). The method of a terminal comprises receiving a synchronization signal associated with a first cell ID from a first satellite forming a cell in which the terminal is located; receiving, from a second satellite, a synchronization signal associated with a second cell ID; receiving, from the first satellite, a message indicating a change of a satellite forming the cell; performing uplink synchronization and downlink synchronization with the second satellite, in response to the message, wherein in case where the message includes information about timing advance (TA), the uplink synchronization is performed based on the TA, and the downlink synchronization is performed based on the synchronization signal associated with the second cell ID.

In addition, according to an embodiment of the disclosure, a method of a first satellite in an NTN is provided. The method of a first satellite comprises transmitting, to a terminal within a cell formed by the first satellite, a synchronization signal associated with a first cell ID of the cell; and transmitting, to the terminal, a message indicating a change of a satellite forming the cell, in case where it is determined that the second satellite is to form the cell, wherein whether the message includes information about timing advance (TA) is determined based on information about an altitude angle of the first satellite or second satellite.

In addition, according to an embodiment of the disclosure, a method of a second satellite in an NTN is provided. The method of a second satellite comprises in case where it is determined that the second satellite is to form a cell formed by a first satellite, transmitting a synchronization signal associated with a second cell ID different from a first cell ID of the cell to a terminal within the cell; performing uplink synchronization and downlink synchronization with the terminal; and in case where the uplink synchronization and the downlink synchronization are completed, transmitting a synchronization signal associated with the first cell ID to the terminal.

In addition, according to an embodiment of the disclosure, a terminal of an NTN is provided. The terminal comprises a transceiver and a controller connected to the transceiver, wherein the controller receives a synchronization signal associated with a first cell ID from a first satellite forming a cell in which the terminal is located, through the transceiver; receives, from a second satellite, a synchronization signal associated with a second cell ID through the transceiver; receives, from the first satellite, a message indicating a change of a satellite forming the cell, through the transceiver; performs uplink synchronization and downlink synchronization with the second satellite, in response to the message, wherein in case where the message includes information about timing advance (TA), the uplink synchronization is performed based on the TA, and the downlink synchronization is performed based on the synchronization signal associated with the second cell ID.

In addition, according to an embodiment of the disclosure, a first satellite of an NTN is provided. The first satellite comprises a transceiver; and a controller connected to the transceiver, wherein the controller transmits, to a terminal within a cell formed by the first satellite, a synchronization signal associated with a first cell ID of the cell, through the transceiver; and transmits, to the terminal, a message indicating a change of a satellite forming the cell, in case where it is determined that the second satellite is to form the cell, through the transceiver, wherein whether the message includes information about timing advance (TA) is determined based on information about an altitude angle of the first satellite or second satellite.

In addition, according to an embodiment of the disclosure, a second satellite of an NTN is provided. The second satellite comprises a transceiver; and a controller connected to the transceiver, wherein the controller transmits a synchronization signal associated with a second cell ID different from a first cell ID of a cell to a terminal within the cell, through the transceiver, in case where it is determined that the second satellite is to form the cell formed by a first satellite; performs uplink synchronization and downlink synchronization with the terminal; and transmits a synchronization signal associated with the first cell ID to the terminal, through the transceiver, in case where the uplink synchronization and the downlink synchronization are completed.

### [Advantageous Effects of Invention]

Various embodiments of the disclosure provides a method for a terminal to change a satellite connection in which even if a satellite forming a specific cell is changed in a non-terrestrial network (NTN), the terminal may change a satellite connection without initiating a procedure for synchronization with a new satellite by performing uplink synchronization and downlink synchronization with a new satellite on the basis of information for uplink synchronization and information for downlink synchronization that have been obtained in advance.

According to the above method, even if a satellite in communication is changed, a user's terminal can experience high communication quality without interruption, and there is no need to perform the synchronization procedure which is performed when the existing satellite is changed, such that the number of communication signals among the terminal, the satellite, a core network, and a server (e.g. a satellite management server), etc., can be reduced, thereby reducing management complexity in the server and reducing power consumption of the terminal.

The effects that can be obtained from the disclosure are not limited to the effects mentioned above, and other effects not mentioned can be clearly understood by those skilled in the art from the description below.

### [Brief Description of Drawings]

The above and other aspects, features, and advantages of certain embodiments of the disclosure will be more apparent from the following description taken in conjunction with the accompanying drawings.
FIG. 1 is a diagram illustrating the structure of an NTN to which the disclosure may be applied.
FIG. 2 is a diagram illustrating an example of applying the NTN considered by the disclosure to an NR system.
FIG. 3 is a diagram illustrating an earth moving cell and an earth fixed cell in an NTN to which the disclosure may be applied.
FIG. 4 is a diagram illustrating a method for changing satellite connection in case where a satellite forming a cell is changed in an NTN to which the disclosure may be applied.
FIG. 5 is a diagram illustrating a method for a terminal to perform uplink synchronization with a new satellite based on temporary timing advance (TTA) in NTN according to an embodiment of the disclosure.
FIG. 6 is a diagram illustrating a method for a terminal to determine whether to use TTA when performing uplink synchronization in an NTN according to an embodiment of the disclosure.
FIG. 7 is a diagram illustrating a method for a terminal to perform downlink synchronization with a new satellite in an NTN according to an embodiment of the disclosure.
FIG. 8 is a diagram illustrating a structure of a synchronization signal broadcast by an existing satellite and a structure of a synchronization signal broadcast by a new satellite in an NTN according to an embodiment of the disclosure.
FIG. 9A is a diagram illustrating a method for a terminal to perform uplink synchronization and downlink synchronization with a new satellite in case where a satellite forming a cell is changed in an NTN according to an embodiment of the disclosure.
FIG. 9B is a diagram illustrating a method for a terminal to perform uplink synchronization and downlink synchronization with a new satellite in case where a satellite forming a cell is changed in an NTN according to an embodiment of the disclosure.
FIG. 10A is a diagram illustrating a method for a terminal to perform uplink synchronization and downlink synchronization with a new satellite in case where a satellite forming a cell is changed in an NTN according to an embodiment of the disclosure.
FIG. 10B is a diagram illustrating a method for a terminal to perform uplink synchronization and downlink synchronization with a new satellite in case where a satellite forming a cell is changed in an NTN according to an embodiment of the disclosure.
FIG. 11 is a diagram illustrating the overall operation of a terminal according to an embodiment of the disclosure.
FIG. 12 is a diagram illustrating the overall operation of a satellite forming a cell according to an embodiment of the disclosure.
FIG. 13 is a diagram illustrating the overall operation of a satellite forming a cell according to an embodiment of the disclosure.
FIG. 14 is a diagram illustrating a structure of a terminal according to an embodiment of the disclosure.
FIG. 15 is a diagram illustrating a structure of a network entity according to an embodiment of the disclosure.

### [Mode for the Invention]

Hereinafter, embodiments of the disclosure will be described in detail with reference to the accompanying drawings.

In the description of embodiments, technical features that are well known to the technical field to which the disclosure belongs but are not directly associated with the disclosure are not described.

This is not to obscure but to clearly deliver the gist of the disclosure by omitting an unnecessary description.

For the same reason, in the accompanying drawings, some elements are exaggerated, omitted, or schematically shown. In addition, sizes of elements do not fully reflect actual sizes thereof. Like reference numbers are used to refer to like elements through at the drawings.

Advantages and features of the disclosure and methods of accomplishing the same may be understood more readily by reference to the following detailed description of the embodiments of the disclosure and the accompanying drawings.

The disclosure may, however, be embodied in many different forms and should not be construed as being limited to the embodiments set forth herein, rather, these embodiments are provided such that the disclosure will be thorough and complete, and will fully convey the concept of the disclosure to those of ordinary skill in the art, and the disclosure will be defined only by the concept of the claims. Like reference numerals denote like elements throughout the specification.

Here, it could be understood that each block in processing flowchart drawings and combinations of flowchart drawings may be performed by computer program instructions. These computer program instructions may be loaded in a processor of a general-purpose computer, a particular-purpose computer, or other programmable data processing equipment, and thus, the instructions performed by a processor of a computer or other programmable data processing equipment may generate a means to perform functions described in flowchart block(s). These computer program instructions may also be stored in a computer-usable or computer-readable memory capable of orienting a computer or other programmable data processing equipment to implement a function in a particular mode, and thus, the instructions stored in the computer-usable or computer-readable memory may also produce a production item involving an instruction means to perform a function described in flowchart block(s). These computer program instructions may also be loaded in a computer or other programmable data processing equipment, and thus, a computer-executable process may also be generated by performing a series of operation steps on the computer or the other programmable data processing equipment so that the instructions executed in the computer or the other programmable data processing equipment provide steps for executing functions described in flowchart block(s).

In addition, each block may indicate a portion of a module, a segment, or a code including one or more executable instructions for executing particular logical function(s). Also, it should be noted that in several substitutional embodiments, functions described in blocks may also be out of a sequence. For example, two consecutively shown blocks may be substantially performed at the same time in fact, or the blocks may be sometimes performed in a reverse order according to a corresponding function.

Here, the term ` -unit' used in the embodiments denotes a component including software or hardware, such as a field programmable gate array (FPGA) or an application-specific integrated circuit (ASIC), and the '-unit' performs certain roles. However, the '-unit' is not limited to software or hardware. The '-unit' may be constituted be included in an addressable storage medium or to reproduce one or more processors. Therefore, for example, the '-unit' includes components, such as software components, object-oriented software components, class components, and task components, processes, functions, attributes, procedures, subroutines, segments of program code, drivers, firmware, microcode, circuits, data, a database, data structures, Tables, arrays, and variables. A function provided inside components and '-units' may be combined into a smaller number of components and '-units' or be further divided into additional components and '-units'. In addition, components and '-units' may be implemented to reproduce one or more central processing units (CPUs) inside a device or a security multimedia card.

In the following description, some of terms and names defined in the 3rd generation partnership project (3GPP) standards (standards for 5G, NR, LTE, or similar systems) may be used for the convenience of description. In addition, terms and names used in existing communication systems or newly defined in next-generation communication systems (e.g., 6G and beyond-5G systems) to which the disclosure is applicable may also be used. Use of these terms is not intended to limit the disclosure by the terms and names, and the disclosure may be applied in the same way to systems that conform other standards. Also, the disclosure may be changed to other forms without departing from the technical spirit of the disclosure.

Further, unless clearly indicating other contents in an embodiment of the disclosure, it should be understood that a singular expression, such as "a(n)" or "the", may include a plural expression.

Further, in an embodiment of the disclosure, the terms including an ordinal number, such as "a first" and "a second" may be used to describe various elements, but the corresponding elements should not be limited by such terms. These terms are used merely to distinguish between one element and any other element. For example, a first element may be termed a second element, and similarly, a second element may be termed a first element without departing from the scope of the disclosure.

Further, in an embodiment of the disclosure, the term "and/or" includes any one or combinations of a plurality of relevant items enumerated.

Further, the terms as used in an embodiment of the disclosure are merely used to describe specific embodiments, and are not intended to limit the disclosure. A singular expression may include a plural expression unless they are definitely different in a context. In the specification, the terms "include" or "have" are intended to specify the existence of mentioned features, numbers, steps, operations, elements, components, or combinations thereof, and should be construed as not precluding the possible existence or addition of one or more other features, numbers, steps, operations, elements, components, or combinations thereof.

Further, in an embodiment of the disclosure, the terms "associated with" and "associated therewith", as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like.

Further, in the disclosure, the expression "greater than" or "less than" is used to determine whether a specific condition is satisfied or fulfilled, but this is intended only to illustrate an example and does not exclude "greater than or equal to" or "equal to or less than." A condition indicated by the expression "greater than or equal to" may be replaced with a condition indicated by "greater than", a condition indicated by the expression "equal to or less than" may be replaced with a condition indicated by "less than," and a condition indicated by "greater than and equal to or less than" may be replaced with a condition indicated by "greater than and less than."

Before the detailed description of the disclosure, examples of construable meanings of some terms used herein are given below. However, it should be noted that the terms are not limited to the examples of the construable meanings as given below.

In the disclosure, a terminal (or communication terminal) is an entity that communicates with a base station or any other terminal, and may be referred to as a node, a user equipment (UE), a next generation UE (NG UE), a mobile station (MS), a device, a terminal, or the like. Also, the terminal may include at least one of a smartphone, a tablet personal computer (PC), a mobile phone, a video phone, an electronic book reader, a desktop PC, a laptop PC, a netbook computer, a personal digital assistant (PDA), a portable multimedia player (PMP), an MP3 player, a medical device, a camera, and a wearable device. Also, the terminal may include at least one of a television, a digital video disk (DVD) player, an audio, a refrigerator, an air conditioner, a vacuum cleaner, an oven, a microwave oven, a washing machine, an air purifier, a set-top box, a home automation control panel, a security control panel, a media box, a game console, an electronic dictionary, an electronic key, a camcorder, and an electronic photo frame. In addition, the terminal may include at least one of various medical devices (e.g., various portable medical measuring devices (blood glucose monitoring device, heart rate monitoring device, blood pressure measuring device, body temperature measuring device, etc.), a magnetic resonance angiography (MRA), a magnetic resonance imaging (MRI), a computed tomography (CT), a camera, an ultrasonic machine, etc.), a navigation device, a satellite navigation system (a global navigation satellite system (GNSS)), an event data recorder (EDR), a flight data recorder (FDR), a vehicle infotainment device, an electronic equipment for a ship (e.g., ship navigation device, gyro-compass, etc.), avionics, a security device, an automobile head unit, a home or industrial robot, a drone, an automatic teller's machine (ATM) in banks, point of sales (POS) in a shop, or Internet of things devices (e.g., light bulb, various sensors, sprinkler device, fire alarm, thermostat, streetlamp, toaster, sporting goods, hot water tank, heater, boiler, etc.). In addition, the terminal may include various types of multi-media systems capable of performing communication functions. However, the disclosure is not limited by the above examples, and the terminal may also be referred to by terms having the same or similar meanings.

In addition, in the disclosure, a base station is an entity that communicates with terminals and allocates resources to the terminals, and may have various forms, and may be referred to as a base station (BS), a Node B (NB), a next generation radio access network (NG RAN), an access point (AP), a transmission reception point (TRP), a wireless access unit, a base station controller, a node on a network, or the like. Alternatively, according to function split, the base station may be referred to as a central unit (CU) or a distributed unit (DU). However, the disclosure is not limited by the above examples, and the base station may also be referred to by terms having the same or similar meanings.

In addition, in the disclosure, high-level information may be referred to as a high-level message, a high-level signal, high-level signaling, high layer signaling, or higher layer signaling, a radio resource control (RRC) message, but the disclosure is not limited thereto, and the high-level information may be referred to as the term having the same or similar meaning.

In addition, in the disclosure, control information may be referred to as a control message, control signaling, medium access control (MAC)-control element (CE), or downlink control information (DCI), but the disclosure is not limited thereto, and the control information may be referred to as the term having the same or similar meaning.

Mobile communication systems, including 3G, long term evolution (LTE), and 5G, have provided connectivity that allows transmission and reception of voice and data across a variety of devices. Existing mobile communication systems have provided connectivity not only to portable personal devices such as mobile phones, smartphones, and personal tablets, but also to highly mobile devices such as light and small sensor terminals, Internet of Things terminals, connected cars, drones, and Unmanned Arial Vehicles (UAV), and the number and range of devices provided with connectivity through mobile communication systems is expected to continue to expand.

In the above-described mobile communication system, in case of providing connectivity to a device, communication is performed through a terrestrial base station installed on the ground using radio frequencies. A terrestrial base station has the advantage of being easy to install and manage, but there is a physical limitation that the installation location is on the ground. Due to these limitations, it is difficult to provide connectivity to devices located in the ocean (e.g., a ship or a smartphone on a ship) or ocean where it is difficult to install a terrestrial base station, or to devices located above (e.g., an airplane, high-altitude pseudo-satellite (HAPS), or hot air balloons) or above a certain altitude.

In order to overcome the physical limitations of existing mobile communication systems and expand the range of connectivity provided on the ground to a global level, in the next-generation mobile communication systems such as 5G, Beyond 5G, and 6G, a communication system that combines a terrestrial network and a satellite network is being considered. Existing satellite networks have also provided connectivity through satellites, but the existing satellite networks have been operated as a separate and independent network from the mobile communication system, and communication with the satellite network is possible through dedicated terminals and devices. As a result, in order for users of the existing mobile communication system to use the satellite network, additional procedures such as purchasing a separate device and registering as a satellite network user were required. In order to resolve the inconvenience of using such a satellite network and provide users with uninterrupted and seamless connectivity regardless of the user's location, satellite-integrated terrestrial network technology that combines a satellite network with a mobile communication system or non-terrestrial network (NTN) technology is being discussed. By utilizing a satellite-integrated terrestrial network, connectivity can be provided not only to devices that can be connected on the existing ground, but also to devices at sea and in the sky. The connectivity can also be provided to devices in rural areas, rough terrains, and underdeveloped areas where it is difficult to install a mobile communication infrastructure.

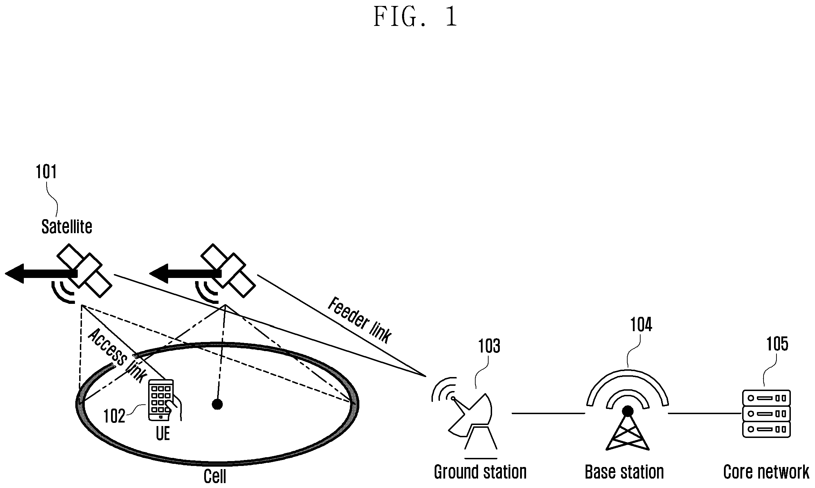

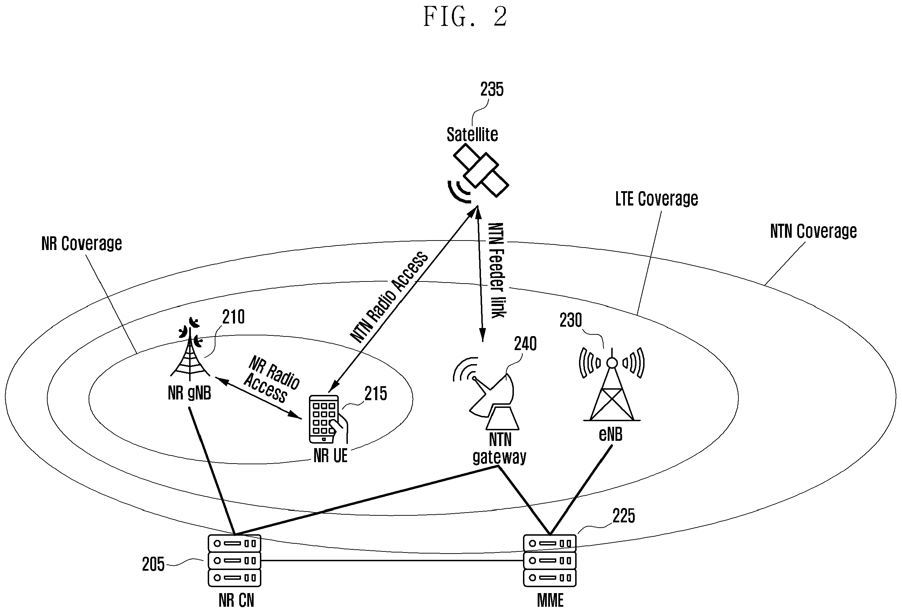

Hereinafter, with reference to FIGS. 1 and 2, the NTN considered in the disclosure will be described in detail.

FIG. 1 is a diagram showing the structure of an NTN to which the disclosure may be applied.

With reference to FIG. 1, an NTN to which the disclosure may be applied may include a satellite 101, a terminal 102, a ground station 103, a base station 104, or a core network 105. Meanwhile, the NTN considered in the disclosure is not limited to the structure illustrated in FIG. 1, and may additionally include a network entity or network node.

In FIG. 1, the satellite 101 may refer to a transparent satellite or a regenerative satellite. The transparent satellite and the regenerative satellite are classified according to the function of the satellite. The transparent satellite is a bent-pipe satellite that can perform the function of amplifying and forwarding signals transmitted from the terrestrial network. In other words, the transparent satellite can function as a kind of relay node. Meanwhile, the transparent satellite cannot use inter-satellite links. In contrast, in addition to acting as a simple relay node, the regenerative satellite is capable computing, processing, and decoding radio signals. Meanwhile, the regenerative satellite can perform the function of a distributed unit (DU) or central unit (CU) in an NR, and can also perform the function of an independent base station. Additionally, the regenerative satellite can also perform multi-hop communication between satellites using ISL.

As illustrated in FIG. 1, the connection between the terminal 102 and the satellite 101 may be referred to as an access link, and the connection between the satellite 101 and the ground station 103 may be referred to as a feeder link. Meanwhile, the feeder link may refer to a connection between the satellite 101 and the base station 104, and in case where the ground station 103 and the base station 104 are combined into one, the feeder link may refer to a connection between the combined ground station 103 and base station 104, and satellite 101. The core network 105 may include a user plane function (UPF) and network function (NF) in NR or a satellite control server in satellite communication.

Meanwhile, the NTN considered by this disclosure may be applied to an NR system.

FIG. 2 is a diagram illustrating an example of applying the NTN considered by the disclosure to an NR system.

With reference to FIG. 2, the NTN considered by the disclosure may include a new radio node B (hereinafter NR gNB or an NR base station) 210, a new radio core network (NR CN) 205, a satellite 235 and an NTN gateway 240. A new radio user equipment (NR UE or user equipment) 215 may be connected to an external network through the NR gNB 210 and the NR CN 205. When the NR UE 215 connects to the NTN, the NR UE 215 may transmit and receive data with the satellite 235, and the satellite 235 may transmit and receive data with the NTN gateway 240. The NTN gateway may be connected to the NR CN 205 or MME 225, and, although not illustrated in FIG. 2, the NTN gateway may also be connected to the NR gNB 210.

In FIG. 2, the NR gNB 210 may correspond to an evolved Node B (eNB) of an existing LTE system. The NR gNB is connected with the NR UE 215 through a radio channel and may provide a superior service more than an existing node B. In a next generation mobile communication system, all user traffics may be serviced through a shared channel. Accordingly, there is a need for a device that performs scheduling by combining state information such as the buffer state, available transmission power state, and channel state of UEs, and the NR gNB 210 may take charge of the device. One NR gNB 210 may control several cells. In a next generation mobile communication system, a bandwidth over the current maximum bandwidth may be applied to implement high-speed data transmission in comparison to the current LTE. In addition, a beamforming technology may be additionally employed by using orthogonal frequency division multiplexing (OFDM) as a radio connection technology. It may also possible to apply modulation scheme and adaptive modulation & coding (hereafter, referred to as AMC) determining a channel coding rate, depending on the channel state of a user equipment.

The NR CN 205 may perform function such as mobility support, bearer configuration, and Quality of Service (QoS) configuration. The NR CN 205, which is a device being in charge of not only a mobility management function for UEs, but also various control functions, may be connected with several base stations. In addition, the next generation mobile communication systems may operate with an existing LTE system and the NR CN 205 may be connected with the MME 225 through a network interface. The MME 225 may be connected with the eNB 230 that is an existing base station.

Meanwhile, the above-described NTN is only an example of a communication system to which the disclosure may be applied, and the disclosure is not limited thereto. It is apparent that the disclosure may be applied to a communication system having a structure different from the NTN described above.

The altitudes of satellites that may be used in the above-mentioned NTN vary. The types of satellites that may be used can be classified into a geostationary satellite (GEO) and a mobile satellite. In addition, mobile satellites can be classified into a low earth orbit (LEO) satellite and a middle earth orbit (MEO) satellite depending on the altitude of the orbit. The GEO refers to a satellite that flies in a geostationary orbit at an altitude of about 36,000 km. Since the rotation period of the GEO is the same as the Earth's, when viewed from the earth's surface, the GEO appears to be stationary at a point in the sky. In case of communicating with the GEO due to the high satellite altitude, a wireless signal is relatively weak compared to a terrestrial network due to path loss in a radio arrival signal, and the performance of communication through the wireless signal is also low. In addition, the round trip time between satellites and devices and terminals on the ground is relatively long (about 500 milliseconds). Because the LEO satellite and the MEO satellite exist at lower altitudes compared to the GEO, there is less radio wave attenuation and the wireless signals are relatively stronger. Meanwhile, compared to the terrestrial network, radio wave attenuation is still large and wireless signals are weak. In addition, unlike the GEO, the LEO satellite and the MEO satellite move at very high speeds relative to the Earth's surface (approximately 7.56 km in low earth orbit).

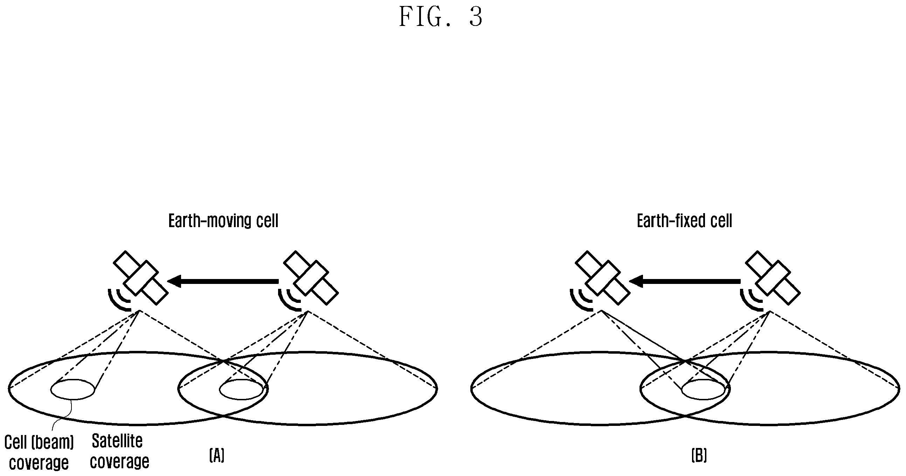

Meanwhile, in the above-described NTN, a satellite cell, which is a unit that manages terminals, may be formed through a spot beam emitted from a satellite. Because the LEO satellite move in a certain orbit at a very high speed, the satellite coverage that allows the satellite to communicate with the terminal also moves along the satellite. Therefore, the method for operating a satellite cell may vary depending on the method for configuring the satellite cell. According to an embodiment of the disclosure, a method for configuring a satellite cell may be classified into an earth-moving cell and an earth-fixed cell. FIG. 3A illustrates the earth-moving cell, and FIG. 3B illustrates the earth-fixed cell. The earth-moving cell is used in a satellite structure in which the satellite's antenna does not rotate but is always fixed in a direction perpendicular to the horizon, and is a cell in which as the satellite moves, the satellite cell also has the same mobility. In contrast, in the earth-fixed cell, a certain area on the ground is designated as a satellite cell, and then the satellite adjusts the angle of the spot beam and fixes the spot beam at the designated location, so a cell can be formed at the designated location even if the satellite moves at high speed. In this case, the beam angle of the satellite forming the spot beam may be adjusted mechanically or electronically. Meanwhile, in the earth-fixed cell, the time for one satellite to form a cell is relatively longer than in the earth-moving cell, so it has the advantage of being able to alleviate a phenomenon that may occur due to the high mobility of the satellite. Hereinafter, the disclosure will focus on the case where a satellite forms the earth-fixed cell. Meanwhile, the disclosure is not limited thereto, and the disclosure may be applied even when a satellite cell is configured and operated in a different way.

Similar to the synchronous communication technology of the terrestrial network that synchronizes the terminal and the base station and transmits and receives data accordingly, the NTN also synchronizes the terminal and the satellite and transmits and receives data accordingly. Therefore, accurately matching the uplink synchronization and downlink synchronization between the terminal and the satellite can greatly affect communication performance. According to one embodiment, the downlink synchronization is achieved using a synchronization signal broadcast from a satellite, and the uplink synchronization is achieved using a signal transmitted from the terminal.

According to one embodiment, a satellite may broadcast a synchronization signal that informs the terminal of synchronization information at regular intervals. In the NTN to which the disclosure may be applied, a satellite may broadcast a synchronization signal, such as a synchronization signal block (SSB), at regular intervals. The SSB may be composed of a primary synchronization signal (PSS), a secondary synchronization signal (SSS), and a physical broadcast channel (PBCH), and may include a signal indicating synchronization information. Meanwhile, there may be an identity (ID) (e.g., cell ID or physical cell ID (PCI)) for the synchronization signal so that the synchronization signal may be distinguished by cell, and the terminal may distinguish the synchronization signal by cell through the ID. In case where initially accessing a cell or performing handover from another cell, the terminal may obtain downlink synchronization information through synchronization signal information. In addition, the terminal may obtain uplink synchronization information by performing a random access procedure (or random access channel (RACH) procedure) on the cell to which the terminal initially accesses or on a target cell of handover.

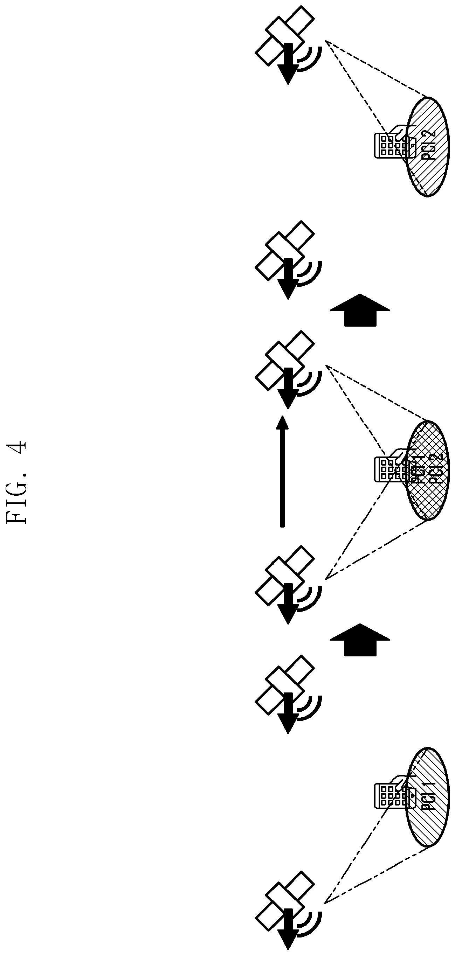

In the case of the above-mentioned earth-fixed cell, a method for specifying a different cell ID (or PCI) for each spot beam forming a cell may be considered when managing satellite cells. A detailed description thereof will be provided with reference to FIG. 4.

FIG. 4 is a diagram illustrating a method for changing satellite connection in case where a satellite forming a cell is changed in an NTN to which the disclosure may be applied.

FIG. 4 is a diagram illustrating a method for changing satellite connection in case where a satellite forming a ground fixed cell among satellite cells is changed.

With reference to FIG. 4, a case where the spot beam forming a cell is changed within the satellite or to another satellite and the cell ID of the earth-fixed cell is changed is illustrated. Meanwhile, even in case where the terminal in the earth-fixed cell does not move and is fixedly located in the corresponding cell, since the cell ID continuously changes, a problem may arise in that a procedure such as handover (i.e., a procedure for changing a connection to a new cell) must be performed to a new cell with a different cell ID every time the cell ID changes. Meanwhile, when searching for a synchronization signal with a different cell ID, the terminal may compare the signal strength between the synchronization signal of the current cell ID and the synchronization signal of another cell ID. In case where the synchronization signal of another cell ID satisfies a predetermined condition (for example, in case where the signal strength of the synchronization signal of another cell ID is greater than or equal to a certain threshold or a difference between the signal strength of the synchronization signal of the current cell ID and the signal strength of the synchronization signal of another cell ID is greater than or equal to a certain threshold), the terminal may use the synchronization signal of another cell ID and subsequent information (e.g., uplink synchronization information or downlink synchronization information for another cell) to change the connection to the other cell. Meanwhile, in the disclosure, changing the connection may mean performing uplink synchronization and downlink synchronization.

Due to the mobility of the satellite, the terminal must change the satellite connection after a certain period of time. This may be a similar procedure to handover due to movement of the terminal in a mobile communication system. Therefore, in the NTN, a procedure similar to handover in a terrestrial network may be performed whenever the satellite connection changes. For example, the terminal that needs to change satellite connection may decode the synchronization signal to obtain synchronization information and cell-related information (e.g., frequency, configuration value, etc.) for the new cell formed by the new satellite, and obtain the synchronization information, including downlink synchronization information. After this, the terminal may perform a random access procedure based on the acquired information. The terminal may perform a 4-step random access procedure or a 2-step random access procedure depending on cell configurations and terminal status. Hereinafter, for convenience of explanation, the description will be based on the case where the terminal performs a 4-step random access procedure. Meanwhile, the disclosure is not limited thereto, and the terminal may perform a 2-step random access procedure. The terminal may transmit a random access preamble (or RACH preamble, Msg1) to a satellite or base station. The satellite or base station that has received the random access preamble may transmit to the terminal a random access response (RAR) (or Msg 2), which includes uplink synchronization information (e.g., Timing Advance) and cell-related information (uplink scheduling resources or downlink scheduling resources, etc.) measured using the random access preamble. The terminal that has received the RAR may transmit a message (Msg 3) including uplink scheduling information and information for completing connection with the satellite or base station. The satellite or base station that has received Msg3 may transmit to the terminal a contention resolution message (Msg4) including the content that the Msg3 has been received normally, so that the 4-step random access procedure may be completed and a connection between the terminal and the base station may be established.

As described above, a method for specifying different cell IDs for each spot beam forming a cell when managing a satellite cell has the advantage of being applicable without significantly changing the existing terrestrial network system (LTE system or NR system), and the method is also easy in terms of system management difficulty. Meanwhile, since the mobility due to the high speed of satellites is not a phenomenon that exists in the existing terrestrial network, the terminal experiences the mobility of the satellite, and thus, the terminal may always experience the same environment as a user's terminal riding a train on the ground. As a result, in case where the cell ID is changed depending on the mobility of the satellite, all terminals within the cell must frequently perform a procedure to change the connected cell (e.g., a procedure similar to a handover procedure). Also, even for the terminal that is not connected, in case where a certain number of spot beams is changed, the terminal must frequently perform a process of updating the location of the terminal (e.g., tracking area update (TAU) or registration area update (RAU)).

In summary, the following problems may occur when applying different cell IDs for each spot beam. First, due to the mobility of satellites, a new satellite forms a new cell with different cell ID through spot beam, so the terminal frequently performs a procedure to change the connection to a new cell (e.g., handover) for data communication and voice communication, and the random access procedure for establishing a new satellite connection may cause a decrease in communication performance. During the handover process, which is similar to the process of changing the connection to a new cell, a communication interruption time exists because the terminal cannot perform communications. Because these communication interruption time frequently occurs every few seconds or minutes due to the mobility of the satellite, the user may experience a decrease in communication performance. Second, signaling overhead and computation overhead due to the cell change of the terminal may increase significantly in a management server (e.g., core network) compared to the terrestrial network. When the cell ID to which the terminal is connected is changed, the terminal sends a signal updating the change in its location to the management server. In the terrestrial network, a location change update signal occurs only when the terminal moves beyond the cell range. However, in the NTN considered by the disclosure, since the cell ID may be changed due to the mobility of the satellite even if the terminal is fixed in location, a plurality of terminals within the cell send update signals to the management server. Such update signals frequently transmitted by the plurality of terminals may add overhead to the connection link with the management server, and may also act as an overhead in terms of computation and management of the management server itself.

Meanwhile, a method for mapping one specific cell ID to one earth-fixed cell may be considered, rather than applying a different cell ID to each satellite spot beam. However, this method may cause problems in the terminal's synchronization process, which may result in communication failure. Specifically, when changing a satellite connection similar to a handover, whether to change the satellite connection may be determined based on the synchronization signal (e.g., PSS, SSS, DMRS, master information block (MIB), or system information block (SIB)) information broadcast from the satellite before the change and the synchronization signal information of the satellite after the change, and the satellite connection may be changed based on the synchronization signal information of the satellite. However, in case of operating by applying the same cell ID that is unrelated to the spot beam in the earth-fixed cell of the NTN, the terminal may simultaneously receive signals with the same cell ID (e.g., synchronization signal) from a plurality of satellites at the time it needs to determine whether to change the satellite connection. In this case, the synchronization signals broadcast from spot beams with the same cell ID may interfere with and collide with each other, so the terminal may not be able to properly decode the synchronization signal. In addition, even if collision and interference are avoided due to the time difference of the received signals, the terminal may experience confusion when performing synchronization because there are a plurality of points that need to be synchronized.

In this respect, in case of applying a single cell ID to an earth-fixed cell, it may be difficult to determine the time of satellite change (or handover). There may be a case where there are multiple pieces of downlink synchronization information for one cell, so the terminal performing the downlink synchronization may experience confusion. In addition, there may be a case where there are multiple pieces of uplink synchronization information for one cell, so the terminal performing the uplink synchronization may experience confusion. Meanwhile, a method for applying a single cell ID unrelated to the spot beam to the earth-fixed cell has advantages such as reduced signaling overhead and reduced power consumption of the terminal due to a reduction in the frequency of the terminal performing random access procedures, compared to a method for applying different cell IDs for each spot beam to the earth-fixed cell. Accordingly, the disclosure provides a method for solving problems that may occur in case of applying a single cell ID unrelated to a spot beam to the earth-fixed cell. More specifically, according to various embodiments of the disclosure, in case where the NTN operates a single cell ID for each earth-fixed cell, a method for terminals in the earth-fixed to change satellite connections without interruption is provided. Meanwhile, in the disclosure, the satellite connection change by the terminal may mean that the terminal performs an operation to adjust uplink synchronization and downlink synchronization with a new satellite. Alternatively, it may mean that the terminal performs an operation to change the satellite connected to the terminal.

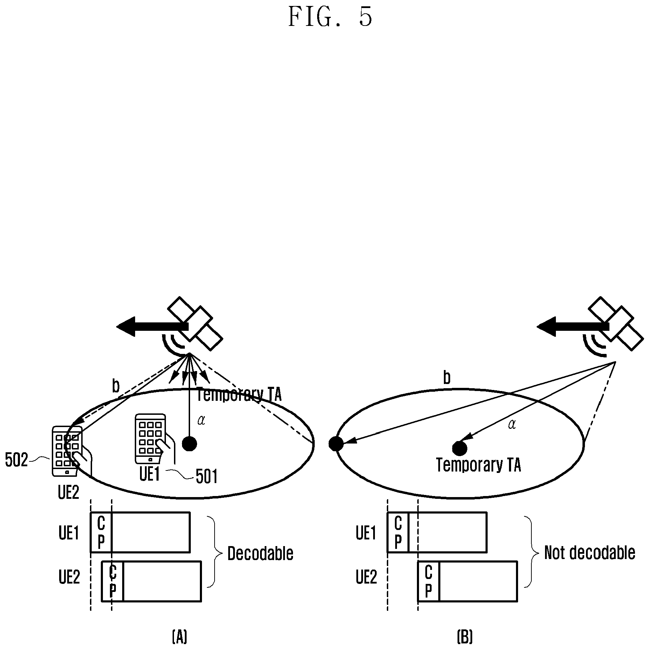

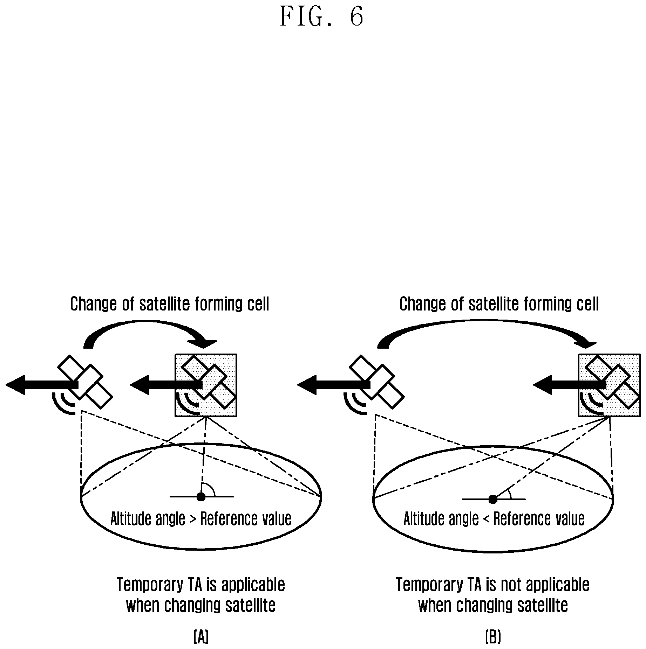

In the NTN to which the disclosure may be applied, the terminal may transmit a signal (e.g., a random access preamble in a random access procedure) to the satellite, and the satellite may obtain (or calculate) the synchronization information (e.g., timing advance (TA)) of uplink based on the received signal, and the satellite may decode the data of the uplink using the obtained TA value. Because changes in TA values are not frequent in the terrestrial network, changes in TA values did not have a significant impact on communication quality. However, in the NTN, a situation arises in which TA values must be calculated relatively frequently due to the mobility of satellites, and the procedure for calculating TA (e.g., random access procedure) may act as overhead. In this regard, the disclosure defines temporary timing advance (TTA), which is the TA that the terminal may temporarily use to perform uplink synchronization with a new satellite when changing the satellite connection, and provides a method for using the TTA. More specific details will be described with reference to FIGS. 5 and 6.

FIG. 5 is a diagram illustrating a method for a terminal to perform uplink synchronization with a new satellite based on temporary timing advance (TTA) in NTN according to an embodiment of the disclosure.

With reference to Figure 5, a TTA that may be commonly used by terminals 501 and 502 within an earth-fixed cell is provided, and in case where a satellite forming the earth-fixed cell changes, the terminals may use the TTA to synchronize an uplink with a new satellite. According to the disclosure, the terminals 501 and 502 do not need to perform a random access procedure to adjust the uplink synchronization with a new satellite, thereby reducing signaling overhead and reducing power consumption of the terminal. According to one embodiment, the terminal and the satellite may temporarily synchronize the uplink using the TTA, and then correct the TA in actual data communication. For example, a satellite may provide an accurate TA value to the terminal through control signaling such as high layer signaling (e.g., an RRC message), MAC CE or DCI. Meanwhile, according to one embodiment, the TTA may be used in case where specific conditions are satisfied. For example, the TTA may be used in case where the maximum difference in actual TA for each terminal in a cell is smaller than the duration of the cyclic prefix (CP) of OFDM. This is because the difference in TA between the terminal 501 located at the cell edge and the terminal 502 located at the cell center is smaller than a specific value (CP duration), so even if TTA, which is a common TA for the terminals 501 and 502, is used, the satellite may decode uplink data. In this case, the TTA may be determined, for example, as a value obtained by dividing a distance between the cell center and the satellite by a propagation speed. In contrast, in case where the maximum difference in actual TA for each terminal in a cell is larger than the duration of the CP of OFDM, the TTA may not be used. This is because the TA difference between the terminal 501 located at the cell edge and the terminal 502 located at the cell center is greater than a specific value (CP duration), so in case of using the TTA, which is a common TA for the terminals 501 and 502, a problem may occur in which the satellite cannot decode uplink data. In this case, the terminals 501 and 502 may acquire (calculate) the TA based on the location information of the satellite or terminal (e.g., global positioning system (GPS), altitude of the satellite, etc.), and may synchronize the uplink with the satellite based on the obtained TA. In case where the terminal and the satellite achieve uplink synchronization using the TTA or the acquired TA, the satellite may calculate the actual TA using the uplink signal transmitted from the terminal and control the TA by providing an accurate TA value to the terminal through control signaling such as high layer signaling (e.g., an RRC message), MAC CE or DCI. Meanwhile, in the disclosure, the TTA may be calculated in the satellite or in a core network or server (e.g., a satellite management server). In addition, whether to use the TTA for the corresponding cell may also be determined by the satellite or by the core network or server (e.g., a satellite management server). FIG. 5 illustrates a method to determine whether to use the TTA based on a difference between actual TAs for respective terminals in a cell. In the NTN considered by the disclosure, the TA difference may be determined according to the location information of the satellite. A detailed description will be made with reference to FIG. 6.

FIG. 6 is a diagram illustrating a method for a terminal to determine whether to use TTA when performing uplink synchronization with a new satellite in an NTN according to an embodiment of the disclosure.

As described above, according to one embodiment of the disclosure, whether to use the TTA for the corresponding cell may be determined by the maximum TA difference of the actual terminal within the cell. Meanwhile, in the NTN considered by the disclosure, this TA difference may be determined based on at least one of the satellite altitude, the altitude angle between the satellite and the cell center (for example, it may mean the smaller value of the angles between the satellite and the cell center), and the size of the satellite. Usually, the altitude of the satellite and the size of the satellite cell are determined when installing the satellite network, so according to one embodiment of the disclosure, whether to use the TTA for the corresponding cell may be determined based on the altitude angle of the satellite. In general, if the altitude angle of the satellite is high, the maximum difference between TAs may be relatively small, and if the altitude angle of the satellite is low, the maximum difference between TAs may be relatively large. Therefore, before the satellite forms a satellite cell, the altitude angle between the center of the satellite cell and the satellite is identified. If the altitude angle is higher than a reference value, the TTA may be used for the corresponding cell, and if the altitude angle is lower than a reference value, the TTA may not be used for the corresponding cell. Meanwhile, in the disclosure, a reference value compared to the altitude angle of the satellite may mean the altitude angle at which the maximum difference between the actual TAs for the respective terminals in the cell is smaller than the CP duration, as described in FIG. 6. This may be calculated and provided by a satellite, a core network, or a server (e.g., a satellite management server), and may be a predetermined value.

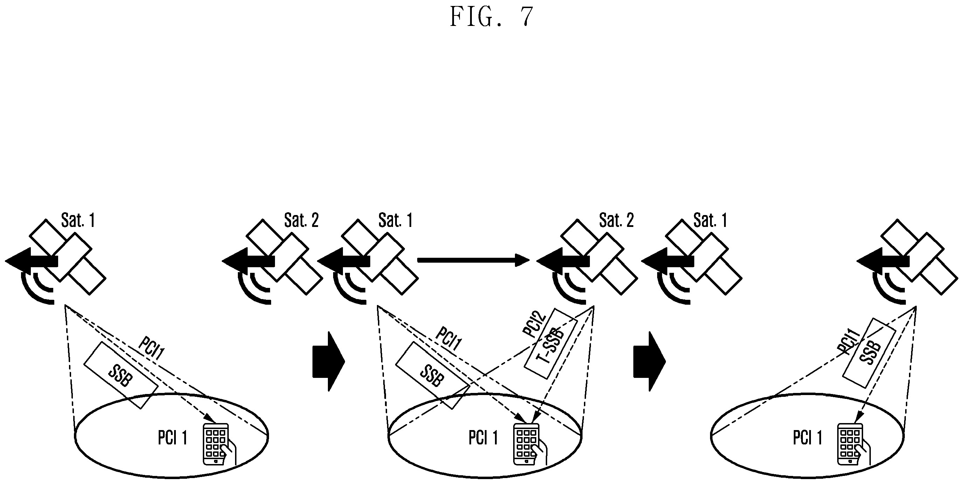

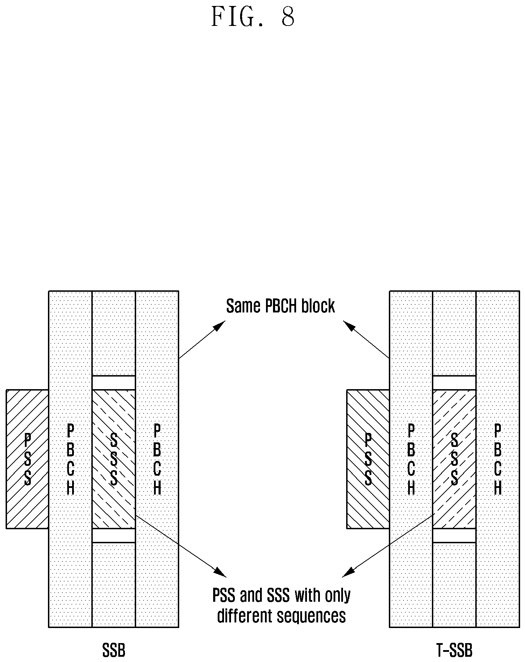

According to the method described in FIGS. 5 and 6, in case where the TTA is available, the terminal may use the TTA to achieve uplink synchronization with a new satellite without performing a random access procedure, or in case where the TTA is not available, the terminal may achieve uplink synchronization with a new satellite using the TA obtained based on the satellite or terminal location information, without performing a random access procedure. Accordingly, it is possible to achieve the effect of reducing signaling overhead and reducing power consumption of the terminal. Meanwhile, in order for the terminal to change the satellite connection to a new satellite, not only uplink synchronization but also downlink synchronization must be performed. Hereinafter, it will be described in detail with reference to FIGS. 7 and 8.

FIG. 7 is a diagram illustrating a method for a terminal to perform downlink synchronization with a new satellite in an NTN according to an embodiment of the disclosure.

With reference to FIG. 7, FIG. 7 is a diagram illustrating a method for a terminal to perform downlink synchronization with a new satellite in case of operating by applying a single cell ID to each earth-fixed cell.

As described above, when operating by applying a single cell ID to a fixed terrestrial cell, when two satellites transmit synchronization signals to the cell, interference between synchronization signals may occur, and the terminal may use multiple satellites. Since signals with the same cell ID are received from simultaneously, there may be confusion about which synchronization signal to perform based on. Accordingly, a problem may arise in which the terminal cannot properly obtain synchronization information through the synchronization signal. Accordingly, the present disclosure provides a method in which a synchronization signal broadcast by a satellite other than the satellite currently forming a ground fixed cell uses a cell ID (e.g., a second cell ID) different from the cell ID of the formed cell, and at the point when the satellite link is actually changed (for example, when the terminal completes uplink synchronization and downlink synchronization with a new satellite, when the terminal transmits a message that the satellite change has been completed to the new satellite, or when the new satellite receives the message) a synchronization signal with a different cell ID is switched to a synchronization signal with a single cell ID (e.g., a first cell ID).

With reference to FIG. 7, it is assumed that there is currently a cell formed by a first satellite. The first satellite broadcasts a synchronization signal (SSB) to the satellite cell. In this case, it is assumed that the cell ID of the synchronization signal is No. 1 (e.g., PCI 1). After a certain period of time, a second satellite also enters an area where it can form a cell, and in case where it is determined that the second satellite will replace the first satellite and form a cell, the second satellite transmits the synchronization signal to the same location as the cell formed by the first satellite. In this case, the synchronization signal transmitted by the second satellite is a synchronization signal with a different cell ID than the synchronization signal of the first satellite, and in the disclosure, the synchronization signal may be referred to as a temporary(T)-SSB in the sense that it is a temporarily transmitted synchronization signal. Meanwhile, the disclosure is not limited to thereto, and the T-SSB may mean a synchronization signal that is different from the synchronization signal transmitted by Satellite 1 only in the cell ID, a synchronization signal that is different in only the PSS/SSS, a synchronization signal with a specific cell ID, etc., as described later. Also, the T-SSB may be referred to by a term having the same or similar meaning. Afterwards, at the time in which it is impossible for the first satellite to form a cell, or in case where the first satellite receives a cell formation stop command from a server (e.g., a satellite management server), the second satellite may switch the broadcasting T-SSB to the SSB that the first satellite has transmitted and transmit the switched SSB. Through this, the terminals located in the cell formed by the first satellite may receive the SSB broadcast by the second satellite and recognize the cell formed by the second satellite as the same cell as the cell formed by the first satellite.

As described in FIG. 7, the synchronization signal (e.g., a SSB) broadcast by the existing satellite and the synchronization signal (e.g., a T-SSB) broadcast by a new satellite may have different cell IDs. A detailed description will be provided with reference to FIG. 8.

FIG. 8 is a diagram illustrating a structure of a synchronization signal broadcast by an existing satellite and a structure of a synchronization signal broadcast by a new satellite in an NTN according to an embodiment of the disclosure.

FIG. 8 is a diagram illustrating examples of SSB and T-SSB structures. The cell ID may be determined by the sequence of PSS and SSS. According to one embodiment, SSB and T-SSB are SSBs that differ only in the sequences of PSS and SSS, and in case where the T-SSB is switched to the SSB, the sequences of PSS and SSS of T-SSB are changed to the sequences of PSS and SSS of SSB and broadcast. Meanwhile, the PSS and SSS sequences of the T-SSB may be within a range of specific values that the terminal knows in advance, and may be a different sequence from the cell currently performing communication. Alternatively, the cell ID determined according to the sequence of the PSS and SSS of the T-SSB may be a predetermined value. For example, the cell ID of the T-SSB may be a predetermined value so that the terminal can distinguish that the T-SSB is an SSB temporarily used for downlink synchronization with a new satellite, The predetermined value may be provided to the terminal. In addition, according to one embodiment, the T-SSB broadcasted by a new satellite may have the same MIB (e.g., system frame number (SFN)) compared to the SSB broadcasted by an existing satellite, and the cell-related system information block (SIB) excluding the SIB including satellite information may also be the same or partially changed.

According to the method described above, the terminal may adjust uplink synchronization and downlink synchronization with a new satellite and perform data transmission and reception. Hereinafter, the specific signaling procedure of the above-described method will be described.

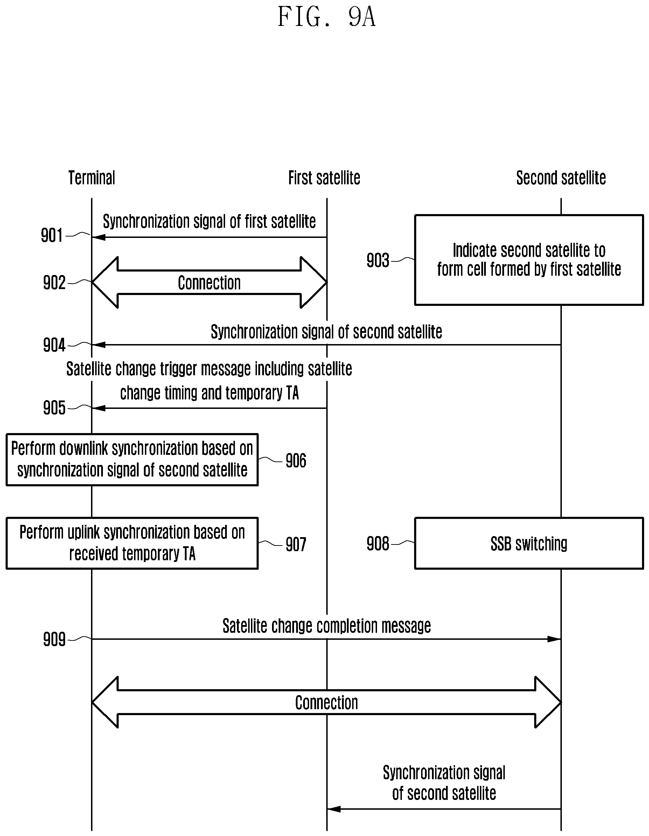

FIG. 9A is a diagram illustrating a method for a terminal to perform uplink synchronization and downlink synchronization with a new satellite in case where a satellite forming a cell is changed in an NTN according to an embodiment of the disclosure.

As described in FIGS. 5 and 6, FIG. 9A is a diagram illustrating a method for a terminal to perform uplink synchronization and downlink synchronization with a new satellite in case of satisfying a certain condition, such as a case where the maximum difference between actual TAs for the respective terminals in a cell is less than CP duration or a case where the altitude angle of the satellite is greater than a reference value, that is, a case where TTA is available for the corresponding cell.

With reference to FIG. 9A, in operation 901, the terminal may receive a synchronization signal including cell information from the first satellite. In this case, the synchronization signal may be the above-described SSB and may include the cell ID of the cell currently being formed by the first satellite. In operation 902, the terminal may establish a connection with the first satellite. After a certain time or in a case where a signal strength between the first satellite and the terminal is equal to or less than a certain value, it may be determined that the second satellite replaces the first satellite to form the cell formed by the first satellite. In operation 903 , the second satellite may be indicated to form the corresponding cell by the core network or server (e.g., a satellite management server). Afterwards, in operation 904, the second satellite may broadcast a synchronization signal (e.g., the T-SSB described above) whose cell ID is different from the synchronization signal broadcast by the first satellite. The terminal may receive a synchronization signal broadcast from the second satellite and identify (or recognize) that the second satellite, which is a new satellite, is going to form the current cell. For example, the terminal may identify the cell ID of the synchronization signal broadcast from the second satellite, and in case where the identified cell ID corresponds to a predetermined cell ID, the terminal may identify (or recognize) that the current cell will be formed by the second satellite, which is a new satellite, and monitor the synchronization signal broadcast from the second satellite. Alternatively, the terminal may obtain and store downlink synchronization information in advance based on the synchronization signal broadcast from the second satellite. In operation 905, in case where the satellite forming the cell reaches the point where the first satellite is changed to the second satellite, the first satellite may transmit a message (e.g., a satellite change message, a satellite connection change message, or a handover message) indicating (or triggering) the terminal in the cell to change a satellite connection to the second satellite. In this case, the message indicating to change the satellite connection may include at least one of the timing of changing the satellite connection (e.g., information related to a time domain such as system frame, subframe, slot, or symbol) and the TTA. In operation 906, the terminal may obtain downlink synchronization information based on the synchronization signal of the second satellite at the timing received through the message and adjust downlink synchronization with the second satellite accordingly. In addition, in operation 907, in case where the received message includes the TTA, the terminal may adjust the uplink synchronization with the second satellite based on the TTA. In operation 908, the second satellite may switch the synchronization signal (e.g., a T-SSB) being broadcast to a synchronization signal having the same cell ID as the synchronization signal being broadcast by the first satellite, and the second satellite may broadcast the switched synchronization signal. Thereafter, in operation 909, the terminal may transmit a message indicating that the satellite connection change to a new satellite has been completed (e.g., a satellite connection change complete message, a satellite change complete message, or a handover complete message) to the second satellite, and establish a connection with the second satellite.

Meanwhile, FIG. 9A illustrates that operations 901 to 909 are performed sequentially, but the disclosure is not limited thereto. Some of operations 901 to 909 may be omitted or operations 901 to 909 may be performed simultaneously.

In addition, FIG. 9A illustrates a signaling procedure between one terminal and the first satellite and the second satellite, but the disclosure is not limited thereto. In case where the satellite forming a cell is changed, at least one terminal (or a terminal group, or all terminals) within the corresponding cell may change the satellite connection to a new satellite by performing operations 901 to 909 described above.

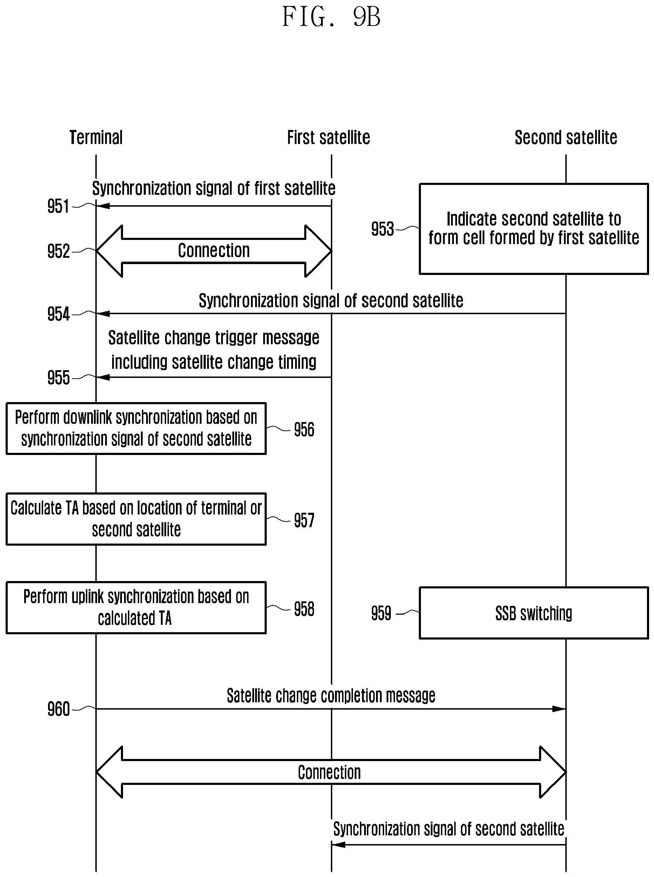

FIG. 9B is a diagram illustrating a method for a terminal to perform uplink synchronization and downlink synchronization with a new satellite in case where a satellite forming a cell is changed in an NTN according to an embodiment of the disclosure.

As described in FIGS. 5 and 6, FIG. 9B is a diagram illustrating a method for a terminal to perform uplink synchronization and downlink synchronization with a new satellite in case of not satisfying a certain condition, such as a case where the maximum difference between actual TAs for the respective terminals in a cell is greater than CP duration or a case where the altitude angle of the satellite is smaller than a reference value, that is, a case where TTA is not available for the corresponding cell.

With reference to FIG. 9B, in operation 951, the terminal may receive a synchronization signal including cell information from the first satellite. In this case, the synchronization signal may be the above-described SSB and may include the cell ID of the cell currently being formed by the first satellite. In operation 952, the terminal may establish a connection with the first satellite. After a certain time or in case where a signal strength between the first satellite and the terminal is equal to or less than a certain value, it may be determined that the second satellite replaces the first satellite to form the cell formed by the first satellite. In operation 953, the second satellite may be indicated by the core network or server (e.g., a satellite management server) to form a corresponding cell. Afterwards, in operation 954, the second satellite may broadcast a synchronization signal (e.g., a T-SSB) whose cell ID is different from the synchronization signal broadcast by the first satellite. The terminal may receive a synchronization signal broadcast from the second satellite and identify (or recognize) that the second satellite, which is a new satellite, will form the current cell. For example, the terminal may identify the cell ID of the synchronization signal broadcast from the second satellite, and in case where the identified cell ID corresponds to a predetermined cell ID, the terminal may identify (or recognize) that the current cell will be formed by the second satellite, which is a new satellite, and monitor the synchronization signal broadcast from the second satellite. Alternatively, the terminal may obtain and store downlink synchronization information in advance from the synchronization signal broadcast from the second satellite. In operation 955, in case where the satellite forming the cell reaches the point where the first satellite is changed to the second satellite, the first satellite may transmit a message (e.g., a satellite change message, a satellite connection change message, or a handover message) indicating the terminal in the cell to change a satellite connection to the second satellite. In this case, the message indicating to change the satellite connection may include the timing of changing the satellite connection (e.g., information related to a time domain such as system frame, subframe, slot, or symbol). In operation 956, the terminal may obtain downlink synchronization information based on the synchronization signal of the second satellite at the timing received through the message and adjust downlink synchronization with the second satellite accordingly. In addition, in operation 957, in case where the received message does not include the TTA, the terminal may obtain (or calculate) the TA based on location information related to the terminal or satellite (e.g., global positioning system (GPS) information, global navigation satellite system (GNSS) information, location information of the satellite, or location information of a ground station). Thereafter, in operation 958, the terminal may adjust uplink synchronization with the second satellite based on the obtained TA. In operation 959, the second satellite may switch the synchronization signal being broadcast (e.g., a T-SSB) to a synchronization signal having the same cell ID as the synchronization signal being broadcast by the first satellite, and the second satellite may broadcast the switched synchronization signal. Thereafter, in operation 960, the terminal may transmit a message indicating that the satellite connection change to a new satellite has been completed to the second satellite, thereby completing the connection establishment with the second satellite.

Meanwhile, FIG. 9B illustrates that operations 951 to 960 are performed sequentially, but the disclosure is not limited thereto. Some of operations 951 to 960 may be omitted or operations 951 to 960 may be performed simultaneously.

In addition, FIG. 9B illustrates a signaling procedure between one terminal and the first satellite and the second satellite, but the disclosure is not limited thereto. In case where the satellite forming a cell is changed, at least one terminal (or a terminal group, or all terminals) within the corresponding cell may change the satellite connection to a new satellite by performing operations 951 to 960 described above.

In addition, depending on whether the TTA is used for the cell, the signaling procedure in case of using the TTA is illustrated in FIG. 9A, and the signaling procedure in case of not using the TTA is illustrated in FIG. 9B, but in FIGS. 9A and 9B can also be conducted as a single procedure. For example, depending on whether the message transmitted from the first satellite to the terminal in operation 905 in FIG. 9A or the message transmitted from the first satellite to the terminal in operation 955 in FIG. 9B includes the TTA, the terminal may transmit may perform uplink synchronization and downlink synchronization with the second satellite based on the procedure illustrated in FIG. 9A or FIG. 9B.

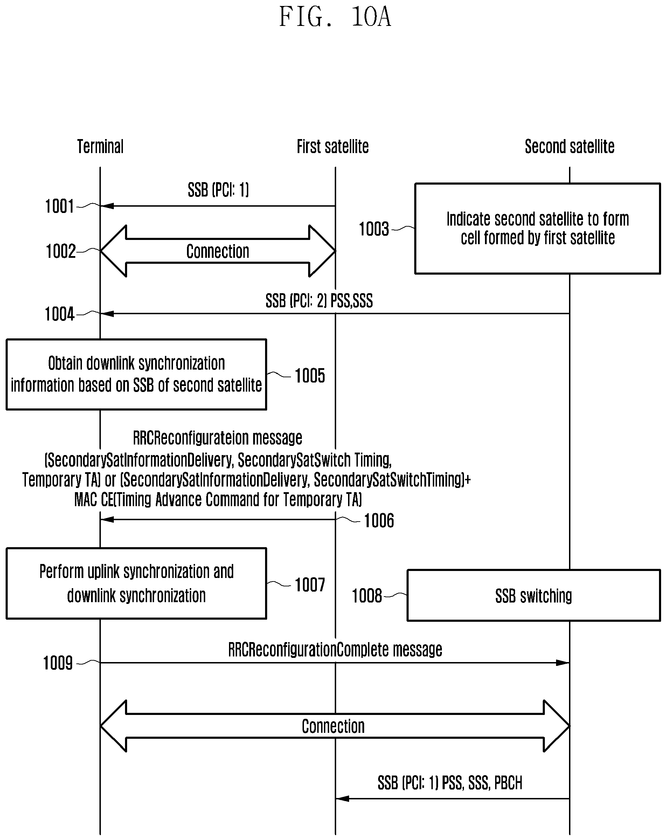

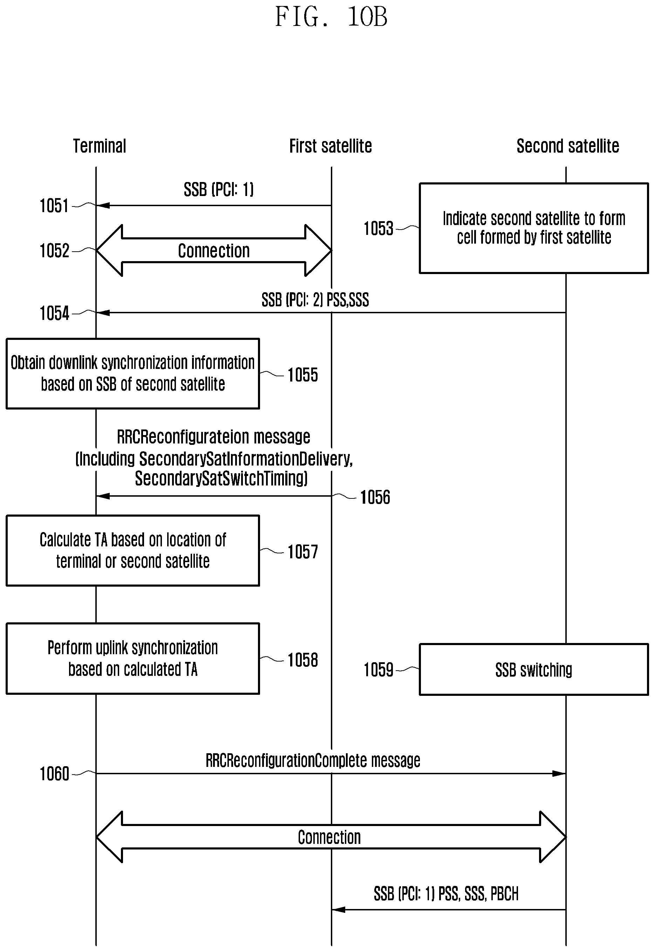

Meanwhile, the above-described procedure may also be considered in a next-generation mobile communication system (e.g., an NR system) to which the disclosure may be applied. Hereinafter, it will be described in detail with reference to FIGS. 10A and 10B.

FIG. 10A is a diagram illustrating a method for a terminal to perform uplink synchronization and downlink synchronization with a new satellite in case where a satellite forming a cell is changed in an NTN according to an embodiment of the disclosure.

In case of considering the NTN in the next-generation mobile communication system to which the disclosure may be applied, FIG. 10A is a diagram illustrating a method in which a satellite forming an earth-fixed cell in the NTN is changed, and a terminal performs uplink synchronization and downlink synchronization with a new satellite

With reference to FIG. 10A, in operation 1001, the terminal may receive a synchronization signal including cell information from the first satellite. In this case, the synchronization signal may be the above-described SSB and may include the cell ID of the cell currently being formed by the first satellite. In operation 1002, the terminal may establish a connection with the first satellite. After a certain time or in a case where a signal strength between the first satellite and the terminal is equal to or less than a certain value, it may be determined that the second satellite replaces the first satellite to form the cell formed by the first satellite. In operation 1003 , the second satellite may be indicated to form the corresponding cell by the core network or server (e.g., a satellite management server). Afterwards, in operation 1004, the second satellite may broadcast a synchronization signal (e.g., a SSB) whose cell ID is different from the synchronization signal broadcast by the first satellite. The terminal may receive a synchronization signal broadcast from the second satellite and identify (or recognize) that the second satellite, which is a new satellite, is going to form the current cell. For example, the terminal may identify the cell ID of the synchronization signal broadcast from the second satellite, and in case where the identified cell ID corresponds to a predetermined cell ID, the terminal may identify (or recognize) that the current cell will be formed by the second satellite, which is a new satellite, and monitor the synchronization signal broadcast from the second satellite. In operation 1005, the terminal may obtain downlink synchronization information based on the synchronization signal broadcast from the second satellite. In operation 1006, in case of reaching a point in which the satellite forming the cell is changed from the first satellite to the second satellite, the first satellite may transmit a message indicating the terminal within the cell to change a satellite connection to the second satellite (e.g. , a satellite change message, a satellite connection change message, or a handover message). In this case, the message indicating to change the satellite connection may correspond to a high layer message (e.g., a radio resource control (RRC) message). In this case, the message may include at least one of information about the second satellite (e.g., at least one of location, speed, and orbit information may be included), the timing of changing the satellite connection (e.g., information related to a time domain such as system frame, subframe, slot, or symbol) and the TTA. Alternatively, the indication of changing the satellite connection may be a combination of a high layer message and control signaling, such as a MAC CE, in which case the message may include at least one of information about the second satellite and the timing of changing the satellite connection. The MAC CE may include a timing advance (TA) command) for the TTA. In operation 1007, the terminal may adjust downlink synchronization with the second satellite based on the obtained downlink synchronization information at the timing received through the message. In addition, in case where the received message includes the TTA, the terminal may adjust uplink synchronization with the second satellite based on the TTA. In operation 1008, the second satellite may switch the synchronization signal being broadcast to a synchronization signal having the same cell ID as the synchronization signal being broadcast by the first satellite, and the second satellite may broadcast the switched synchronization signal. Thereafter, in operation 1009, the terminal may transmit a message indicating that the satellite connection change to a new satellite has been completed (e.g., a satellite connection change complete message, a satellite change complete message, a handover complete message, or an RRC message) to the second satellite, and establish a connection with the second satellite.

Meanwhile, FIG. 10A illustrates that operations 1001 to 1009 are performed sequentially, but the disclosure is not limited thereto. Some of operations 1001 to 1009 may be omitted or operations 1001 to 1009 may be performed simultaneously.

In addition, FIG. 10A illustrates a signaling procedure between one terminal and the first satellite and the second satellite, but the disclosure is not limited thereto. In case where the satellite forming a cell is changed, at least one terminal (or a terminal group, or all terminals) within the corresponding cell may change the satellite connection to a new satellite by performing operations 1001 to 1009 described above.

FIG. 10B is a diagram illustrating a method for a terminal to perform uplink synchronization and downlink synchronization with a new satellite in case where a satellite forming a cell is changed in an NTN according to an embodiment of the disclosure.

In case of considering the NTN in the next-generation mobile communication system to which the disclosure may be applied, FIG. 10B is a diagram illustrating a method in which a satellite forming an earth-fixed cell in the NTN is changed, and a terminal performs uplink synchronization and downlink synchronization with a new satellite

With reference to FIG. 1 OB, in operation 1051, the terminal may receive a synchronization signal including cell information from the first satellite. In this case, the synchronization signal may be the above-described SSB and may include the cell ID of the cell currently being formed by the first satellite. In operation 1052, the terminal may establish a connection with the first satellite. After a certain time or in case where a signal strength between the first satellite and the terminal is equal to or less than a certain value, it may be determined that the second satellite replaces the first satellite to form the cell formed by the first satellite. In operation 1053, the second satellite may be indicated by the core network or server (e.g., a satellite management server) to form a corresponding cell. Afterwards, in operation 1054, the second satellite may broadcast a synchronization signal (e.g., a SSB) whose cell ID is different from the synchronization signal broadcast by the first satellite. The terminal may receive a synchronization signal broadcast from the second satellite and identify (or recognize) that the second satellite, which is a new satellite, will form the current cell. For example, the terminal may identify the cell ID of the synchronization signal broadcast from the second satellite, and in case where the identified cell ID corresponds to a predetermined cell ID, the terminal may identify (or recognize) that the current cell will be formed by the second satellite, which is a new satellite, and monitor the synchronization signal broadcast from the second satellite. In operation 1055, the terminal may obtain downlink synchronization information based on the synchronization signal broadcast from the second satellite. In operation 1056, in case of reaching a point in which the satellite forming the cell is changed from the first satellite to the second satellite, the first satellite may transmit a message indicating the terminal within the cell to change a satellite connection to the second satellite (e.g. , a satellite change message, a satellite connection change message, or a handover message). In this case, the message indicating to change the satellite connection may correspond to a high layer message (e.g., a radio resource control (RRC) message). The message may include at least one of information about the second satellite (e.g., at least one of location, speed, and orbit information may be included) and the timing of changing the satellite connection (e.g., information related to a time domain such as system frame, subframe, slot, or symbol). In operation 1057, the terminal may adjust downlink synchronization with the second satellite based on the obtained downlink synchronization information. In addition, in case where the received message does not include the TTA, the terminal may obtain (or calculate) the TA based on location information related to the terminal or satellite (e.g., global positioning system (GPS) information, global navigation satellite system (GNSS) information, location information of the satellite or location of a ground station). Thereafter, in operation 1058, the terminal may adjust uplink synchronization with the second satellite based on the obtained TA. In operation 1059, the second satellite may switch the synchronization signal being broadcast (e.g., a SSB) to a synchronization signal having the same cell ID as the synchronization signal being broadcast by the first satellite, and the second satellite may broadcast the switched synchronization signal. Thereafter, in operation 1060, the terminal may transmit a message indicating that the satellite connection change to a new satellite has been completed (e.g., a satellite connection change complete message, a satellite change complete message, a handover complete message, or an RRC message) to the second satellite, thereby completing the connection establishment with the second satellite.

Meanwhile, FIG. 10B illustrates that operations 1051 to 1060 are performed sequentially, but the disclosure is not limited thereto. Some of operations 1051 to 1060 may be omitted or operations 1051 to 1060 may be performed simultaneously.

In addition, FIG. 10B illustrates a signaling procedure between one terminal and the first satellite and the second satellite, but the disclosure is not limited thereto. In case where the satellite forming a cell is changed, at least one terminal (or a terminal group, or all terminals) within the corresponding cell may change the satellite connection to a new satellite by performing operations 1051 to 1060 described above.

In addition, depending on whether the TTA is used for the cell, the signaling procedure in case of using the TTA is illustrated in FIG. 10A, and the signaling procedure in case of not using the TTA is illustrated in FIG. 10B, but in FIGS. 10A and 10B can also be conducted as a single procedure. For example, depending on whether the message transmitted from the first satellite to the terminal in operation 1006 in FIG. 10A or the message transmitted from the first satellite to the terminal in operation 1056 in FIG. 10B includes the TTA, the terminal may transmit may perform uplink synchronization and downlink synchronization with the second satellite based on the procedure illustrated in FIG. 10A or FIG. 10B.

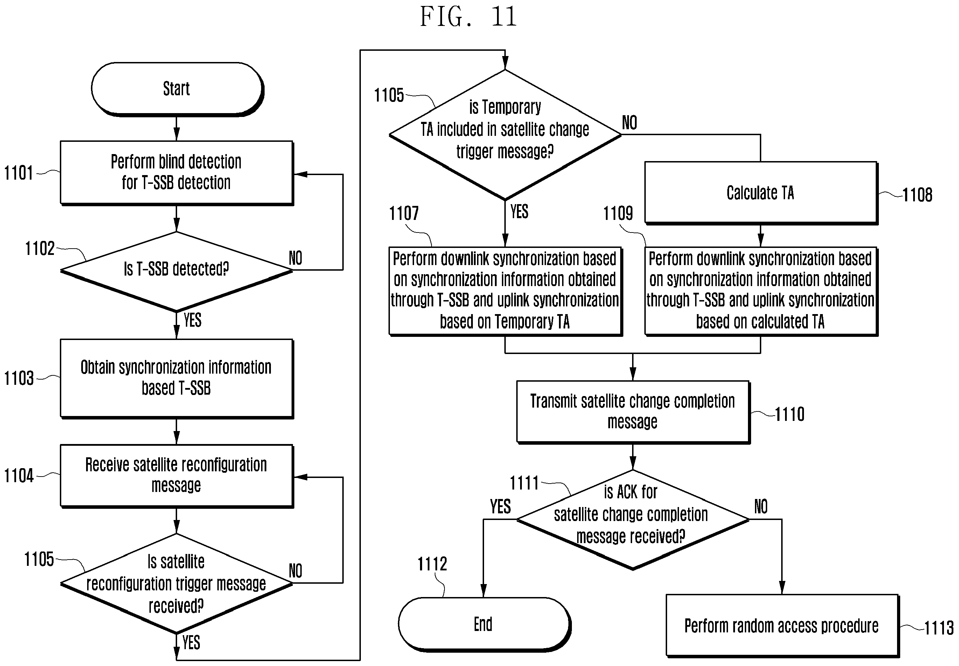

FIG. 11 is a diagram illustrating the overall operation of a terminal according to an embodiment of the disclosure.

With reference to FIG. 11, in operation 1101, the terminal may perform blind detection to detect a synchronization signal (e.g., a T-SSB) having a cell ID different from the synchronization signal (e.g., a SSB) broadcast by the satellite forming a current cell. For example, the terminal may identify whether a synchronization signal with a cell ID different from the ID of the formed cell is detected. In this case, the synchronization signal broadcast by the satellite forming the current cell includes the ID of the formed cell, and the other cell ID may be a predetermined value so that the terminal can recognize that it is a synchronization signal temporarily broadcast by a new satellite. The predetermined value may be provided to the terminal in advance.

In operation 1102, the terminal may identify whether the T-SSB is detected. In case where a synchronization signal with a different cell ID is detected, the terminal may perform the operation in operation 1103. In case where a synchronization signal with a different cell ID is not detected, the terminal may perform the blind detection operation in operation 1101.

In operation 1103, the terminal may monitor a synchronization signal with a different cell ID and obtain downlink synchronization information (e.g., system frame number, subframe number) from the synchronization signal.

In operation 1104, the terminal may receive a satellite reconfiguration message (e.g., a high layer message such as an RRC message or control signaling such as MAC CE or DCI) from the satellite currently forming the cell.

In operation 1105, the terminal may identify whether the satellite reconfiguration message received in operation 1104 corresponds to a message indicating (or triggering) a change of satellite connection (e.g., a satellite change message, a satellite connection change message, or a handover message).

In case where the satellite reconfiguration message received by the terminal corresponds to a message indicating (or triggering) a change of satellite connection (e.g., a satellite change message, a satellite connection change message, or a handover message), in operation 1106, the terminal may identify whether the received message includes the above-described TTA.

In case where the satellite reconfiguration message includes the TTA, in operation 1107, the terminal may adjust downlink synchronization with a new satellite based on the synchronization information obtained through T-SSB, and adjust uplink synchronization with a new satellite based on the TTA.

In addition, in case where the satellite reconfiguration message does not include the TTA, in operation 1108, the terminal may obtain (or calculate) the TA based on the location information related to the terminal or satellite (e.g., global positioning system (GPS) information, global navigation satellite system (GNSS) information, location information of the satellite, orbital information, or location information of a ground station). After that, in operation 1109, the terminal may adjust downlink synchronization with a new satellite based on the synchronization information obtained through the T-SSB, and adjust uplink synchronization with a new satellite based on the TA obtained in operation 1108.

The terminal that has performed uplink synchronization and downlink synchronization with a new satellite may transmit a message indicating that the satellite connection change has been completed to the new satellite in operation 1110.

Afterwards, in operation 1111, the terminal may identify whether a response message (e.g., acknowledgement (ACK)) to the message transmitted in operation 1110 is received.

In case where the response message (e.g., ACK) to the message transmitted in operation 1110 is received, the terminal may complete connection establishment with a new satellite in operation 1112.

Alternatively, in case where the response message (e.g., ACK) to the message transmitted in operation 1110 is not received, the terminal may determine that the connection with the new satellite is not properly established, and the terminal may initiate a random access procedure for a new satellite in operation 1113.

Meanwhile, in FIG. 11, operations 1101 to 1113 are illustrated as being performed sequentially, but the disclosure is not limited thereto. Some of operations 1101 to 1113 may be omitted or operations 1101 to 1113 may be performed simultaneously.

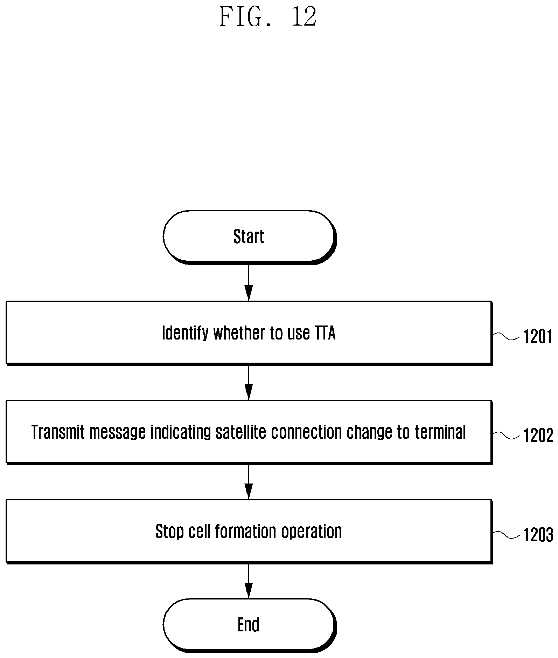

FIG. 12 is a diagram illustrating the overall operation of a satellite forming a cell according to an embodiment of the disclosure.

More specifically, FIG. 12 is a diagram illustrating the overall operation of the existing satellite currently forming a cell (hereinafter referred to as the first satellite for convenience of explanation) in an NTN where the satellite forming the cell is changed due to the mobility of the satellite.

With reference to FIG. 12, after a certain time or in case where a signal strength between the first satellite and the terminal is equal to or less than a certain value, it may be determined that the second satellite replaces the first satellite, and forms the cell currently formed by the first satellite. In case where the satellite forming the cell reaches at a point where the first satellite is changed to the second satellite, in operation 1201, the first satellite may identify whether the TTA is used for the currently formed cell. For example, the first satellite may identify whether the TTA is used based on a result of comparing the actual maximum difference in TA for the respective terminals in the currently formed cell with the CP duration. Alternatively, the first satellite may identify whether the TTA is used based on a result of comparing the altitude angle of the satellite with a reference value. Since the specific details of identifying whether the TTA is used for the corresponding cell have been described above, they will be omitted here.

In case where it is identified in operation 1201 that the TTA may be used for the corresponding cell, in operation 1202, the first satellite may transmit a message (e.g., a satellite change message, a satellite connection change message, or a handover message) indicating the terminal in the corresponding cell to change the satellite connection to the second satellite. In this case, the message indicating to change the satellite connection may include at least one of the timing of changing the satellite connection (e.g., information related to a time domain such as a system frame, subframe, slot, or symbol), and TTA.

Alternatively, in case where it is identified in operation 1201 that the TTA cannot be used for the corresponding cell, in operation 1202, the first satellite may transmit a message (e.g., a satellite change message, a satellite connection change message, or a handover message) indicating the terminal in the corresponding cell to change the satellite connection to the second satellite. In this case, the message indicating to change the satellite connection may include the timing of changing the satellite connection (e.g., information related to a time domain such as a system frame, subframe, slot, or symbol).

Afterwards, in case where a cell formation stop command is received from a core network or server (e.g., a satellite management server), in operation 1203, the first satellite may stop transmitting a spot beam to the cell.

Meanwhile, in FIG. 12, operations 1201 to 1203 are illustrated as being performed sequentially, but the disclosure is not limited thereto. Some of operations 1201 to 1203 may be omitted or operations 1201 to 1203 may be performed simultaneously.

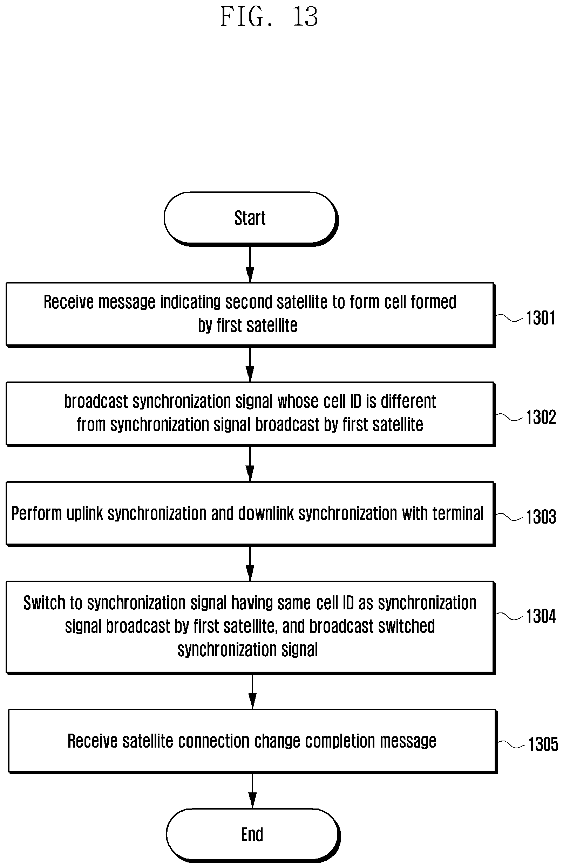

FIG. 13 is a diagram illustrating the overall operation of a satellite forming a cell according to an embodiment of the disclosure.

More specifically, FIG. 13 is a diagram illustrating the overall operation of a new satellite (hereinafter referred to as the second satellite for convenience of explanation) indicated to form the cell formed by the existing satellite in an NTN where the satellite forming the cell is changed due to the mobility of the satellite.

With reference to FIG. 13, in operation 1301, the second satellite may be indicated to form the cell formed by the existing satellite from the core network or server (e.g., a satellite management server).

In operation 1302, the second satellite may broadcast a synchronization signal (e.g., a T-SSB) whose cell ID is different from the synchronization signal (e.g., a SSB) broadcast by the existing satellite. Here, the cell ID of the synchronization signal broadcast by the second satellite may correspond to a predetermined value so that the terminal receives the synchronization signal broadcast from the second satellite and may identify (or recognize) that the current cell will be formed by the second satellite, which is a new satellite. The predetermined value may be provided to the terminal in advance.

In operation 1303, the second satellite may perform downlink synchronization with the terminal based on the broadcasted synchronization signal (e.g., a T-SSB), and perform uplink synchronization with the terminal based on the TA calculated by TTA or the terminal.

In operation 1304, the second satellite may switch the broadcasted synchronization signal (e.g., a T-SSB) to a synchronization signal having the same cell ID as the synchronization signal broadcast by the existing satellite, and may broadcast the switched synchronization.

In operation 1305, the second satellite may receive a message indicating that the satellite connection change has been completed (e.g., a satellite connection change complete message, a satellite change complete message, or a handover complete message) from the terminal, and complete the connection establishment with the terminal.

Meanwhile, in FIG. 13, operations 1301 to 1305 are illustrated as being performed sequentially, but the disclosure is not limited thereto. Some of operations 1301 to 1305 may be omitted or operations 1301 to 1305 may be performed simultaneously.

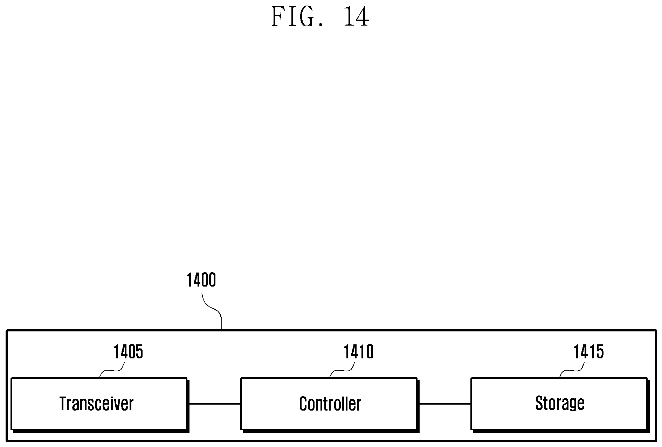

FIG. 14 is a diagram illustrating a structure of a terminal according to an embodiment of the disclosure.

With reference to FIG. 14, a terminal 1400 according to an embodiment of the disclosure may be constituted to include a transceiver 1405, a controller 1410, and a storage 1415. In the disclosure, the controller 1410 of the terminal 1400 may be defined as a circuit, an application-specific integrated circuit, or at least one processor.

The transceiver 1405 may transmit and receive a signal. The transceiver 1405 may transmit, for example, a signal to a satellite or base station according to an embodiment of the disclosure and receive a signal from the satellite or base station.

The controller 1410 may control the overall operation of the terminal 1400 according to an embodiment proposed in the disclosure. For example, the controller 1410 may control signal flow between respective blocks to perform the operation according to the above-described drawings (or flowcharts).

The storage 1415 may store at least one piece of information transmitted and received through the transceiver 1405 and information generated through the controller 1410.

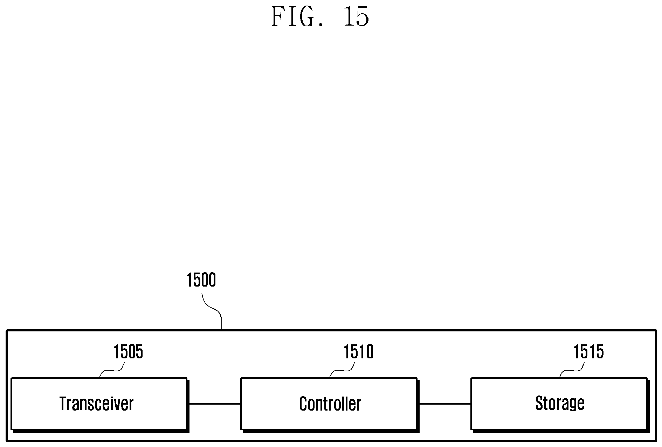

FIG. 15 is a diagram illustrating a structure of a network entity according to an embodiment of the disclosure.

In the disclosure, a network entity 1500 may include a satellite in an NTN. A satellite according to an embodiment of the disclosure may perform the function of a DU or CU in an NR, or may perform the function of an independent base station. Meanwhile, in case where the satellite of the disclosure performs the function of a base station, the satellite may be referred to as a base station or an NTN base station.

With reference to FIG. 15 , the network entity 1500 according to an embodiment of the disclosure may be constituted to include a transceiver 1505, a controller 1510, and a storage 1515. In the disclosure, the controller 1510 of the network entity 1500 may be defined as a circuit, an application-specific integrated circuit, or at least one processor.

The transceiver 1505 may transmit and receive a signal. The transceiver 1505 may transmit, for example, a signal to the terminal according to an embodiment of the disclosure and receive a signal from the terminal. Alternatively, the transceiver 1505 may transmit and receive signals to and from other satellites through an inter-satellite link, and may also perform multi-hop communication between satellites.

The controller 1510 may control the overall operation of the network entity 1500 according to an embodiment proposed in the disclosure. For example, the controller 1510 may control signal flow between respective blocks to perform the operation according to the above-described drawings (or flowcharts).

The storage 1515 may store at least one piece of information transmitted and received through the transceiver 1505 and information generated through the controller 1510.

According to the above described embodiments, even if a satellite forming a specific cell is changed in the NTN, the terminal performs uplink synchronization and downlink synchronization with the changed satellite based on the information for uplink synchronization and downlink synchronization obtained in advance, so that the terminal may change a satellite connection without initiating a procedure for synchronization with the changed satellite connection (e.g., a random access procedure). Accordingly, even if a satellite in communication is changed, a user's terminal can experience high communication quality without interruption. In addition, there is no need to separately perform the synchronization procedure which is performed when changing the satellite, such that the number of communication signals among the terminal, the satellite, the core network, and the server (e.g. an NTN management server), etc., can be reduced, thereby reducing management complexity in the server and reducing power consumption of the terminal.

In the methods proposed in the disclosure, some or all of the contents included in the respective embodiments may be implemented in combination without departing from the essential spirit and scope of the disclosure.

Meanwhile, the embodiments described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented.

Further, although exemplary embodiments have been described and shown in the specification and the drawings by using particular terms, they have been used in a general sense merely to easily explain the technical contents of the disclosure and help understanding of the disclosure, and are not intended to limit the scope of the disclosure. It will be apparent to those skilled in the art that, in addition to the embodiments disclosed herein, other variants based on the technical idea of the disclosure may be implemented.

## Claims

1. A method of a terminal in a non-terrestrial network (NTN), comprising:
receiving a synchronization signal associated with a first cell ID from a first satellite forming a cell in which the terminal is located;
receiving, from a second satellite, a synchronization signal associated with a second cell ID;
receiving, from the first satellite, a message indicating a change of a satellite forming the cell; and
performing uplink synchronization and downlink synchronization with the second satellite, in response to the message,
wherein in case where the message includes information about timing advance (TA), the uplink synchronization is performed based on the TA, and the downlink synchronization is performed based on the synchronization signal associated with the second cell ID.

2. The method of claim 1, wherein in case where the message does not include the information about the TA, the uplink synchronization is performed based on the TA obtained according to location information associated with at least one of the terminal, the first satellite, and the second satellite.

3. The method of claim 1, wherein whether the message includes the information about the TA is determined based on information about an altitude angle of the first satellite or second satellite.

4. The method of claim 1, further comprising:
in case where the uplink synchronization and downlink synchronization with the second satellite are completed, transmitting a message indicating completion of satellite change to the second satellite; and
receiving, from the second satellite, a third synchronization signal associated with the first cell ID.

5. A method of a first satellite in a non-terrestrial network (NTN), comprising:
transmitting, to a terminal within a cell formed by the first satellite, a synchronization signal associated with a first cell ID of the cell; and
transmitting, to the terminal, a message indicating a change of a satellite forming the cell, in case where it is determined that the second satellite is to form the cell,
wherein whether the message includes information about timing advance (TA) is determined based on information about an altitude angle of the first satellite or second satellite.

6. The method of claim 5, wherein in case where the message includes the information about the TA, uplink synchronization between the terminal and the second satellite is performed based on the TA, and
in case where the message does not include the information about the TA, the uplink synchronization between the terminal and the second satellite is performed based on the TA obtained according to location information associated with at least one of the terminal, the first satellite, and the second satellite.

7. A method of a second satellite in a non-terrestrial network (NTN), comprising:
in case where it is determined that the second satellite is to form a cell formed by a first satellite, transmitting a synchronization signal associated with a second cell ID different from a first cell ID of the cell to a terminal within the cell;
performing uplink synchronization and downlink synchronization with the terminal; and
in case where the uplink synchronization and the downlink synchronization are completed, transmitting a synchronization signal associated with the first cell ID to the terminal.

8. The method of claim 7, wherein the uplink synchronization is performed based on a first timing advance (TA) included in a message indicating a change of a satellite forming the cell or a second TA obtained according to location information associated with at least one of the terminal, the first satellite, and the second satellite,
the downlink synchronization is performed based on a synchronization signal associated with the second cell ID,
in case where the message indicating the change of the satellite forming the cell includes information about the first TA, the uplink synchronization is performed based on the first TA,
in case where the message indicating the change of the satellite forming the cell does not include the information about the first TA, the uplink synchronization is performed based on the second TA,
whether the information about the first TA is included in the message indicating the change of the satellite forming the cell is determined based on information about an altitude angle of the first satellite or second satellite.

9. A terminal of a non-terrestrial network (NTN), comprising
a transceiver; and
a controller connected to the transceiver,
wherein the controller receives a synchronization signal associated with a first cell ID from a first satellite forming a cell in which the terminal is located, through the transceiver; receives, from a second satellite, a synchronization signal associated with a second cell ID through the transceiver; receives, from the first satellite, a message indicating a change of a satellite forming the cell, through the transceiver; performs uplink synchronization and downlink synchronization with the second satellite, in response to the message,
wherein in case where the message includes information about timing advance (TA), the uplink synchronization is performed based on the TA, and the downlink synchronization is performed based on the synchronization signal associated with the second cell ID.

10. The terminal of claim 9, wherein in case where the message does not include the information about the TA, the uplink synchronization is performed based on the TA obtained according to location information associated with at least one of the terminal, the first satellite, and the second satellite, and
whether the message includes the information about the TA is determined based on information about an altitude angle of the first satellite or second satellite.

11. The terminal of claim 9, wherein the controller transmits a message indicating completion of satellite change to the second satellite, through the transceiver, in case where the uplink synchronization and downlink synchronization with the second satellite are completed, and receives, from the second satellite, a synchronization signal associated with the first cell ID, through the transceiver.

12. A first satellite of a non-terrestrial network (NTN), comprising:
a transceiver; and
a controller connected to the transceiver,
wherein the controller transmits, to a terminal within a cell formed by the first satellite, a synchronization signal associated with a first cell ID of the cell, through the transceiver; and transmits, to the terminal, a message indicating a change of a satellite forming the cell, in case where it is determined that the second satellite is to form the cell, through the transceiver,
wherein whether the message includes information about timing advance (TA) is determined based on information about an altitude angle of the first satellite or second satellite.

13. The first satellite of claim 12, wherein in case where the message includes the information about the TA, uplink synchronization between the terminal and the second satellite is performed based on the TA, and
in case where the message does not include the information about the TA, the uplink synchronization between the terminal and the second satellite is performed based on the TA obtained according to location information associated with at least one of the terminal, the first satellite, and the second satellite.

14. A second satellite of a non-terrestrial network (NTN), comprising:
a transceiver; and
a controller connected to the transceiver,
wherein the controller transmits a synchronization signal associated with a second cell ID different from a first cell ID of a cell to a terminal within the cell, through the transceiver, in case where it is determined that the second satellite is to form the cell formed by a first satellite; performs uplink synchronization and downlink synchronization with the terminal; and transmits a synchronization signal associated with the first cell ID to the terminal, through the transceiver, in case where the uplink synchronization and the downlink synchronization are completed.

15. The second satellite of claim 14, wherein the uplink synchronization is performed based on a first timing advance (TA) included in a message indicating a change of a satellite forming the cell or a second TA obtained according to location information associated with at least one of the terminal, the first satellite, and the second satellite,
the downlink synchronization is performed based on a synchronization signal associated with the second cell ID,
in case where the message indicating the change of the satellite forming the cell includes information about the first TA, the uplink synchronization is performed based on the first TA,
in case where the message indicating the change of the satellite forming the cell does not include the information about the first TA, the uplink synchronization is performed based on the second TA,
whether the information about the first TA is included in the message indicating the change of the satellite forming the cell is determined based on information about an altitude angle of the first satellite or second satellite.
